(19) Europäisches Patentamt
European Patent Office
Office européen des brevets

(11) **EP 4 513 824 B1**

(12) **EUROPEAN PATENT SPECIFICATION**

(45) Date of publication and mention
of the grant of the patent:
**17.12.2025 Bulletin 2025/51**

(21) Application number: **24191333.4**

(22) Date of filing: **29.07.2024**

(51) International Patent Classification (IPC):
*H04L 9/00* (2022.01)     *H04L 9/32* (2006.01)
*G06Q 20/38* (2012.01)     *G06Q 20/10* (2012.01)
*G06Q 20/40* (2012.01)

(52) Cooperative Patent Classification (CPC):
**H04L 9/50; G06Q 20/10; G06Q 20/3829;**
**G06Q 20/401; H04L 9/008; H04L 9/3271;**
H04L 2209/56; H04L 2209/76

(54) **LEVERAGING BLOCKCHAIN AND CONDITIONAL HOMOMORPHIC PROXY RE-ENCRYPTION FOR ENHANCED TRANSACTION PRIVACY AND AUDITING**

NUTZUNG EINER BLOCKCHAIN UND BEDINGTER HOMOMORPHER PROXY-NEUVERSCHLÜSSELUNG FÜR ERHÖHTE TRANSAKTIONSPRIVATSPHÄRE UND PRÜFUNG

EXPLOITATION DE CHAÎNE DE BLOCS ET RECHIFFREMENT DE MANDATAIRE HOMOMORPHE CONDITIONNEL POUR UNE CONFIDENTIALITÉ ET UNE VÉRIFICATION DE TRANSACTION AMÉLIORÉES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.08.2023 IN 202321056431**

(43) Date of publication of application:
**26.02.2025 Bulletin 2025/09**

(73) Proprietor: **Tata Consultancy Services Limited Maharashtra (IN)**

(72) Inventors:
• **NARUMANCHI, HARIKA**
**500081 Hyderabad (IN)**
• **MADDALI, LAKSHMI PADMAJA**
**500081 Hyderabad (IN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2018/015177     CN-A- 113 743 939**

• **WANG XIN ET AL: "Inter-Bank Payment System on Enterprise Blockchain Platform", 2018 IEEE 11TH INTERNATIONAL CONFERENCE ON CLOUD COMPUTING (CLOUD), IEEE, 2 July 2018 (2018-07-02), pages 614 - 621, XP033399890, DOI: 10.1109/CLOUD.2018.00085**
• **SHARMA BHAVYE ET AL: "Blockchain-based Interoperable Healthcare using Zero-Knowledge Proofs and Proxy Re-Encryption", 2020 INTERNATIONAL CONFERENCE ON COMMUNICATION SYSTEMS & NETWORKS (COMSNETS), IEEE, 7 January 2020 (2020-01-07), pages 1 - 6, XP033731591, DOI: 10.1109/ COMSNETS48256.2020.9027413**

**Description**

CROSS-REFERENCE TO RELATED APPLICATIONS AND PRIORITY

The present application claims priority to Indian application no. 202321056431 filed on 23 August 2023.

TECHNICAL FIELD

The embodiments herein generally relate to the field of financial transactions via blockchain networks and, more particularly, to a method and system for leveraging blockchain and Conditional Homomorphic proxy re-encryption (CH-PRE) for enhanced transaction privacy and auditing.

BACKGROUND

Inter-bank payments on blockchain removes the necessity of correspondent banking relationship and the associated settlement delay. Transactions between banks made on blockchain ensure better transparency, removes the need for explicit reconciliation, improves process efficiency and enables faster settlements in near real-time. Current inter-bank payment systems on blockchain only handle transactions between counterparty banks. The problem in the current system is that a blockchain network can only validate that a bank (or a user in a bank) transacts with another bank (or another user in a bank). Essentially, the blockchain only records a part of the transaction. The blockchain network does not actually verify the actual debit/credit of the sender/receiver. Furthermore, the customer account information is accessible to regulatory authorities such as Reserve Bank of India (RBI) and there is lack of privacy while performing audits, as for example disclosed in WANG XIN ET AL: "Inter-Bank Payment System on Enterprise Blockchain Platform", 2018 IEEE 11TH INTERNATIONAL CONFERENCE ON CLOUD COMPUTING (CLOUD), IEEE, 2 July 2018 (2018-07-02), pages 614-621, XP033399890. Also, current settlement is a long and tedious process and requires access to all financial transactions.

Conventional solutions in literature use Zero Knowledge Proofs (ZKP) to ensure cryptographic guarantees for account balances. These are highly complex and require a large memory. These are computationally intensive and consume resources. Furthermore, it is critical to preserve privacy of customer financial information and provide verifiable cryptographic guarantees for debits and credits of a transaction without revealing customer information.

One of the recent solutions *"Inter-bank transaction with privacy enabled auditing and privacy enabled inter-bank settlements in Blockchain network"* addressing the above problem using cryptographic primitives such as bilinear pairings. The above existing approach is based on permissioned blockchain and other cryptographic primitives such as bilinear pairings use separate storage spaces (such as a Private Database Collection (PDC) in Hyperledger Fabric). PDC's are maintained by banks to store confidential information, whose hashes are linked to global chain. PDCs require additional storage space for storing the private data (customer balances). Maintaining multiple PDCs introduces additional overhead in terms of maintenance for the blockchain network as well as the banks. Managing PDCs requires additional configuration and coordination between organizations, which is challenging. As the number of customers and their transactions increase, banks may face challenges in scaling up storage space to accommodate data as per their needs. PDCs can affect overall performance and scalability of the blockchain network, as they require extra communication across nodes maintained by banks. As the customer information is stored in plaintext in the PDCs, an attacker who is able to gain access to a bank's PDC will be able to read customer balances and transfer amounts.

SUMMARY

Embodiments of the present disclosure present technological improvements as solutions to one or more of the above-mentioned technical problems recognized by the inventors in conventional systems.

For example, in one embodiment, a method for leveraging blockchain and conditional homomorphic proxy re-encryption for enhanced transaction privacy and auditing is provided. The method includes detecting initiation of a bilateral transaction request comprising one of: (a) an inter-bank fund transfer from a first customer of the first bank to a second customer of the second bank with a privacy enabled auditing by the verifier, and (b) privacy enabled inter-bank settlements between the first bank and the second bank, wherein the first bank, the second bank and the verifier individually own a Conditional Homomorphic proxy re-encryption (CH-PRE) key pair comprising a public key stored on the blockchain and a secret key.

Further executing, by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer.

Further encrypting, by the first bank and the second bank via the associated node controlled by the one or more hardware processors, the transaction amount, wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance.

Thereafter storing, via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance.

Furthermore performing, by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of: (a) challenging, the first bank and the second bank by the verifier on the inter-bank fund transfer using the transaction IDs and a challenge nonce; (b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate; (c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank; (d) retrieving the transaction amount by the verifier from the re-encrypted transaction amount using the predicate and a verifier secret key; (e) generating, a verifier tag for each of the first bank and the second bank, by the verifier based on retrieved transaction amount and the challenge nonce; and declaring an audit of the transaction amount as successful, by the verifier, if the generated verifier tag of each of the first bank and the second bank match, else declaring the audit as failure.

Further, if the bilateral transaction request is privacy enabled inter-bank settlements between the first bank and the second bank, the method includes the steps comprising: (a) executing a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair; (b) storing the encrypted sum of credits and sum of debits for each of the first bank and the second bank on the blockchain; (c) challenging the first bank and the second bank by the verifier for the privacy enabled inter-bank settlement using a settlement challenge nonce; (d) generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate; (e) re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank; (f) sum of debits and sum of credits for each of the first bank and the second bank by the verifier from the re-encrypted sum of credits and sum of debits for each of the first bank and the second bank using the predicate and the verifier secret key; (g) generating a settlement verifier tag for each of the first bank and the second bank, by the verifier from the retrieved sum of debits and sum of credits for each of the first bank and the second bank, and the settlement challenge nonce; and (h) declaring the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

In another aspect, a system for leveraging blockchain and conditional homomorphic proxy re-encryption for enhanced transaction privacy and auditing is provided. The system comprises a subnetwork, within a blockchain network controlled by one or more hardware processors, comprising a first bank, a second bank and a verifier participating in the subnetwork via an associated node coupled, wherein the one or more hardware processors is coupled to a memory via one or more I/O interfaces, wherein the one or more hardware processors are configured by the instructions to: detect initiation of a bilateral transaction request comprising one of: (a) an inter-bank fund transfer from a first customer of the first bank to a second customer of the second bank with a privacy enabled auditing by the verifier, and (b) privacy enabled inter-bank settlements between the first bank and the second bank, wherein the first bank, the second bank and the verifier individually own a Conditional Homomorphic proxy re-encryption (CH-PRE) key pair comprising a public key stored on the blockchain and a secret key.

Further execute, by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer.

Further encrypt, by the first bank and the second bank via the associated node controlled by the one or more hardware processors, the transaction amount, wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance.

Thereafter store, via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance.

Furthermore perform, by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of: (a) challenging, the first bank and the second bank by the verifier on the inter-bank fund transfer using the transaction IDs and a challenge nonce; (b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate; (c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank; (d) retrieving the transaction amount by the verifier from the re-encrypted transaction amount using the predicate and a verifier secret key; (e) generating, a verifier tag for each of the first bank and the second bank, by the verifier based on retrieved transaction amount and the challenge nonce; and declaring an audit of the transaction amount as successful, by the verifier, if the generated verifier tag of each of the first bank and the second bank match, else declaring the audit as failure.

Further, if the bilateral transaction request is privacy enabled inter-bank settlements between the first bank and the second bank, the one or more hardware processors are configured to perform the steps comprising: (a) executing a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair; (b) storing the encrypted sum of credits and sum of debits for each of the first bank and the second bank on the blockchain; (c) challenging the first bank and the second bank by the verifier for the privacy enabled inter-bank settlement using a settlement challenge nonce; (d) generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate; (e) re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank; (f) sum of debits and sum of credits for each of the first bank and the second bank by the verifier from the re-encrypted sum of credits and sum of debits for each of the first bank and the second bank using the predicate and the verifier secret key; (g) generating a settlement verifier tag for each of the first bank and the second bank, by the verifier from the retrieved sum of debits and sum of credits for each of the first bank and the second bank, and the settlement challenge nonce; and (h) declaring the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

In yet another aspect, there are provided one or more non-transitory machine-readable information storage mediums comprising one or more instructions, which when executed by one or more hardware processors causes a method for leveraging blockchain and conditional homomorphic proxy re-encryption for enhanced transaction privacy and auditing.

The method includes detecting initiation of a bilateral transaction request comprising one of: (a) an inter-bank fund transfer from a first customer of the first bank to a second customer of the second bank with a privacy enabled auditing by the verifier, and (b) privacy enabled inter-bank settlements between the first bank and the second bank, wherein the first bank, the second bank and the verifier individually own a Conditional Homomorphic proxy re-encryption (CH-PRE) key pair comprising a public key stored on the blockchain and a secret key.

Further executing, by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer.

Further encrypting, by the first bank and the second bank via the associated node controlled by the one or more hardware processors, the transaction amount, wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance.

Thereafter storing, via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance.

Furthermore performing, by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of: (a) challenging, the first bank and the second bank by the verifier on the inter-bank fund transfer using the transaction IDs and a challenge nonce; (b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate; (c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank; (d) retrieving the transaction amount by the verifier from the re-encrypted transaction amount using the predicate and a verifier secret key; (e) generating, a verifier tag for each of the first bank and the second bank, by the verifier based on retrieved transaction amount and the challenge nonce; and declaring an audit of the transaction amount as successful, by the verifier, if the generated verifier tag of each of the first bank and the second bank match, else declaring the audit as failure.

Further, if the bilateral transaction request is privacy enabled inter-bank settlements between the first bank and the second bank, the method includes the steps comprising: (a) executing a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair; (b) storing the encrypted sum of credits and sum of debits for each of the first bank and the second bank on the blockchain; (c) challenging the first bank and the second bank by the verifier for the privacy enabled inter-bank settlement using a settlement challenge nonce; (d) generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate; (e) re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank; (f) sum of debits and sum of credits for each of the first bank and the second bank by the verifier from the re-encrypted sum of credits and sum of debits for each of the first bank and the second bank using the predicate and the verifier secret key; (g) generating a settlement verifier tag for each of the first bank and the second bank, by the verifier from the retrieved sum of debits and sum of credits for each of the first bank and the second bank, and the settlement challenge nonce; and (h) declaring the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

It is to be understood that both the foregoing general description and the following detailed description are exemplary and explanatory only and are not restrictive of the invention, as claimed.

## BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for leveraging blockchain and conditional homomorphic proxy re-encryption (CH-PRE) for enhanced transaction privacy and auditing, in accordance with some embodiments of the present disclosure.

FIGS. 2A through 2D (collectively referred as FIG. 2) is a flow diagram illustrating a method for leveraging blockchain and the CH-PRE for enhanced transaction privacy and auditing, using the system depicted in FIG. 1, in accordance with some embodiments of the present disclosure.

FIGS. 3A and 3B are schematic illustrations of the CH-PRE based privacy enabled auditing for inter-bank fund transfer using the system of FIG. 1, in accordance with some embodiments of the present disclosure.
FIG. 4 is schematic illustrations of the CH-PRE based privacy enabled inter-bank settlements using the system of FIG. 1, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for leveraging blockchain and Conditional Homomorphic proxy re-encryption (CH-PRE) to preserve the privacy of the customer information (balances and transfer amounts) and enabling faster auditable settlement between the banks in the presence of governing body. The blockchain based inter-bank system disclosed herein can perform computations on encrypted data (customer balances and transfer amounts) to audit and validate the transaction data without revealing customer information such as balances. Thus, it ensures fully auditable transactions while preserving customer privacy.

Banks store confidential information in encrypted form on the global ledger. Unlike one of the recent methods mentioned in background section, the method disclosed eliminates the use of Private Database Collection (PDC) in Hyperledger Fabric) by storing encrypted customer balances and transfer amounts directly on global ledger and reducing overheads. Unlike the PDC based approach in the art where customer information is stored in plain text in PDCs and is open to attacks, the method disclosed stores customer balances and transfer amounts in encrypted format. Thus, an attacker who is able to gain access to this encrypted data, cannot read the customer balances and transfer amounts, as the attacker does not possess the bank's private key.

Homomorphic Proxy Re-encryption (H-PRE) has been used in the art for sharing the data between two parties. Here, the source party re-encrypts the data and shares it with the destination party using homomorphic proxy re-encryption. However, the method disclosed herein uses Conditional Homomorphic Proxy Reencryption (CH-PRE) to solve the problem of private auditability of transactions. H-PRE does not restrict malicious proxy to share the re-encryption key with other parties, who will be able to access all the data stored on blockchain encrypted under source's public key. However, CH-PRE restricts the other parties from accessing all the customer information encrypted under the source's public key, only if the intended condition or predicate is satisfied and performs the transaction audits on the encrypted data, ensuring end to end privacy of customer information.

Described below are Primitives to help understand the method disclosed:

**Fully Homomorphic Encryption (FHE):** FHE is considered as holy grail of cryptography, enables computations on encrypted data without the need for decryption, thereby preserving privacy of the data. For a set of FHE ciphertexts corresponding to a set of plaintexts, any arbitrary function can be evaluated without revealing the plaintexts. FHE supports addition and multiplication as primitive operations.

$$Enc(a{+}b){=}Enc(a) + Enc(b) \quad (1)$$

$$Enc(a{*}b){=}Enc(a) * Enc(b) \quad (2)$$

A public key FHE scheme $\xi$ consists of an additional Eval$\xi$ along with the usual (KeyGen$_\xi$, Enc$_\xi$, Dec$_\xi$) from any other public key scheme. Eval$_\xi$ is the evaluation algorithm used for computations on encrypted data. This algorithm takes as input a polynomial expression P and a set of ciphertexts c = $\{C_0, C_1,...,C_n\}$ as inputs to P.

The input output of Eval$_\xi$ satisfies following equation:

$$Dec_\xi(Eval_\xi(P,c,pk),sk) = P(Dec_\xi(c,sk)) \quad (3)$$

To improve the efficiency of homomorphic operations and to reduce space complexity, one can leverage homomorphic batching technique where multiple plaintexts are batched into a single ciphertext. On this batched ciphertext, operations can be performed on component wise plaintexts and can be executed parallelly in Single Instruction Multiple Data (SIMD) manner.

**Blockchain:** This is a decentralized distributed immutable ledger that ensures transparency and records, verifies transactions in a secure way without the need of a trusted entity. A blockchain consists of a continuous chain of transaction blocks linked using cryptographic techniques such as hash functions, digital signatures and Merkle trees. A blockchain network on the other hand is a network of nodes that validate and confirm transactions. Each node on the blockchain network maintains a copy of the blockchain and all the nodes together maintain the integrity of the blockchain. When a transaction is initiated, it is broadcasted to the network of nodes, which validated the transaction. This transaction is grouped with other transactions and added into a block. This block is added to the already existing chain of blocks using a consensus algorithm. Once a block is added to the blockchain, it is immutable. The transactions on blockchain can be publicly verified and any discrepancies can be easily caught which ensures transparency of data on blockchain.

**Proxy Re-encryption (PRE):** Proxy re-encryption (PRE) allows an entity to transform a message encrypted for one party to be decrypted by another party without requiring the secret key of the former party. Along with the traditional symmetric or asymmetric encryption schemes, PRE offers two additional functionalities for delegation as well as transitivity. Delegation enables a user to generate a re-encryption key based on the originator's secret key and target's public key. The re-encryption key is used to re-encrypt a ciphertext encrypted using originator's public key that can be decrypted using the target's secret key. Moreover, a PRE scheme can be unidirectional or bi-directional based on whether the ciphertext can be re-encrypted from target to the originator. In our protocol, we use a unidirectional PRE that can only re-encrypt ciphertext from originator to target but not in reverse order.

**Conditional Homomorphic Proxy Re-encryption (CH-PRE):** The CH-PRE allows computations to be performed on encrypted data that has been transformed in a specific way while certain conditions or predicates are satisfied which can be specified during encryption. A CH-PRE algorithm used is detailed as follows:

**Setup:** Setup algorithm takes security parameter $\lambda$ as input and outputs public parameter set pp. In an implementation herein, it is assumed $\lambda$ is 128-bit security. pp = setup($\lambda$)

**Key Generation:** Key generation algorithm takes public parameter set as input and generates public and private key pair for user $A$ say $pk_A, sk_A$. ($pk_A, sk_A$) = keygen(pp,A)

**Encryption:** Encryption function is used to encrypt an originator's message m using public key of the originator $pk_A$ and predicate p. Predicates ensure that all other ciphertexts expect the one that is intended to be sent are not decrypted by the target entity.

$$c = encrypt(m, pk_A, p) \quad (4)$$

**Re-encryption Key Generation:** A re-encryption is key is used by originator as an input to re-encryption function to transform a ciphertext c encrypted under originator's public key $pk_A$ in such a way that it can be decrypted by the target entity under some predicate $p$. The re-encryption key $rk$ is generated by the originator using public and private keys of the originating party say $pk_A$, $sk_A$, predicate $p$ and public key of the target entity say $pk_B$ who is intended to decrypt the message.

$$rk = rekeygen(sk_A, pk_A, pk_B, p) \quad (5)$$

**Re-encryption:** Re-encryption transforms a ciphertext encrypted under originator's public key $pk_A$ to another ciphertext with the same underlying message which can be decrypted by a target entity using its secret key while a predicate is satisfied. The re-encrypted ciphertext is obtained by applying reencryption key $rk$ and predicate $p$ to a ciphertext c encrypted under $pk_A$. Predicate $p$ ensures that the ciphertext re-encrypted can be decrypted only if the predicate evaluates to *true*. This prevents unauthorized entities to re-encrypt and decrypt other ciphertexts.

$$c' = reencrypt(c, rk, p) \quad (6)$$

**Decryption:** Decryption is performed on re-encrypted ciphertext using the target entity's private key, say $sk_B$ satisfying a predicate $p$.

$$m = decrypt(c', sk_B, p) \quad (7)$$

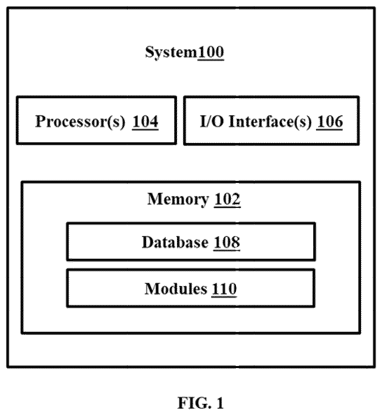

Referring now to the drawings, and more particularly to FIGS. 1 through 4, where similar reference characters denote corresponding features consistently throughout the figures, there are shown preferred embodiments and these embodiments are described in the context of the following exemplary system and/or method.

FIG. 1 is a functional block diagram of a system 100 for leveraging blockchain and Conditional Homomorphic proxy re-encryption (CH-PRE) for enhanced transaction privacy and auditing, in accordance with some embodiments of the present disclosure.

The system 100 herein is the blockchain network with distributed computing across plurality of nodes of the blockchain. The blockchain includes a plurality of subnetworks for bilateral transactions among a plurality of banks participating in the blockchain network via the plurality of nodes. The subnetwork comprises a pair of banks, for example, a pair of the first bank (interchangeably referred herein after as Bank A) and the second bank (interchangeably referred herein after as Bank B) communicating with each other for privacy enabled fund transfer and privacy enabled inter-bank settlements. A verifier such as governing authority, (for example Reserve Bank of India) is part of the subnetwork and can query the banks for auditing of inter-bank fund transfer and inter-bank settlement.

In an embodiment, the system 100 includes a processor(s) 104, communication interface device(s), alternatively referred as input/output (I/O) interface(s) 106, and one or more data storage devices or a memory 102 operatively coupled to the processor(s) 104 in a distributed computing environment of blockchain network. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like acting as the nodes for the participating entities such as banks, and verifiers (governing authorities).

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices such as the nodes within the blockchain network.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

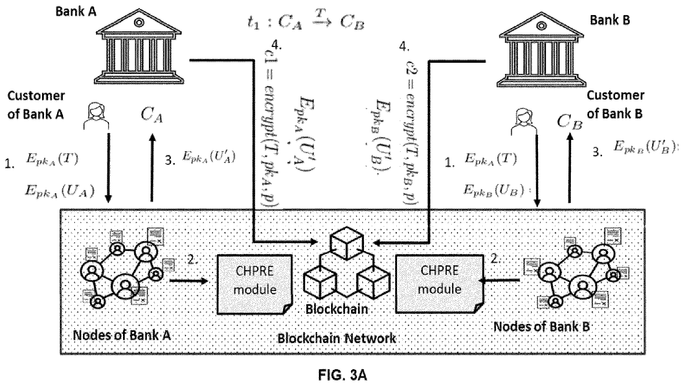

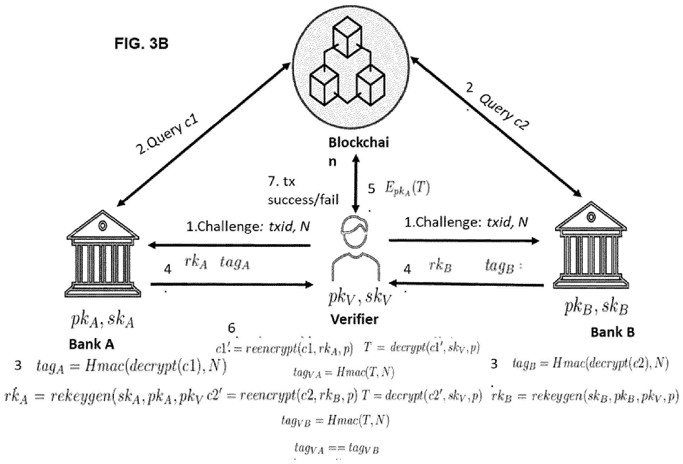

In an embodiment, the memory 102 includes a plurality of modules 110 such as CH-PRE module (depicted in FIG. 3) within a smart contract executed by the blockchain network.

The plurality of modules 110 include programs or coded instructions that supplement applications or functions performed by the system 100 for executing different steps involved in the process of Leveraging Blockchain and the CH-PRE for enhanced Transaction Privacy and Auditing, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

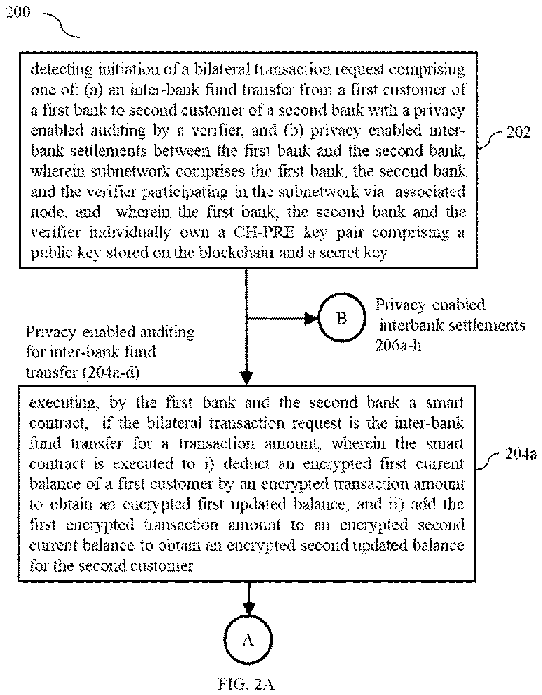

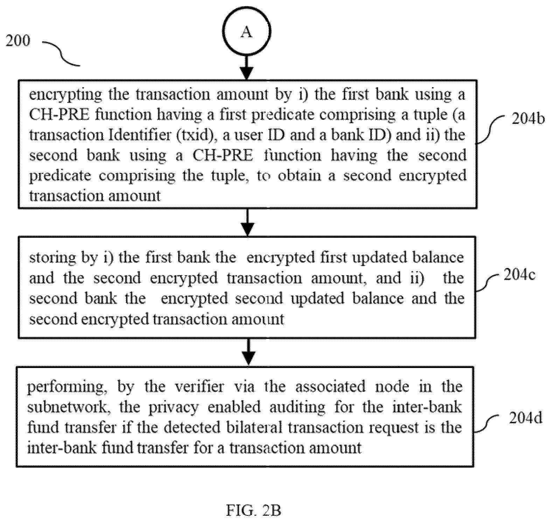

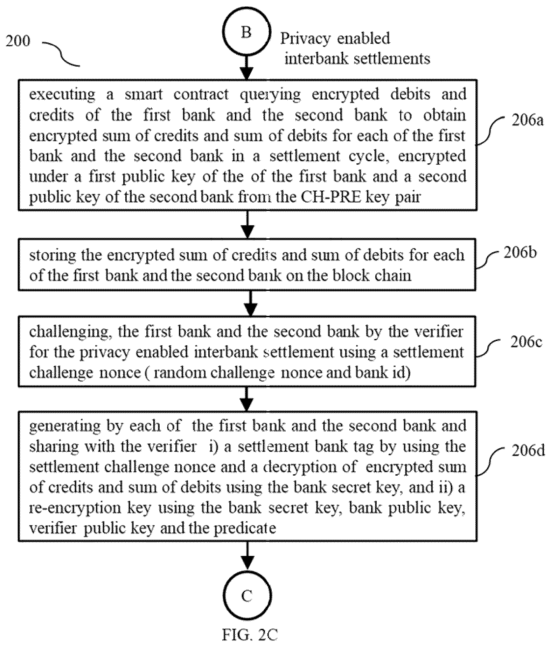

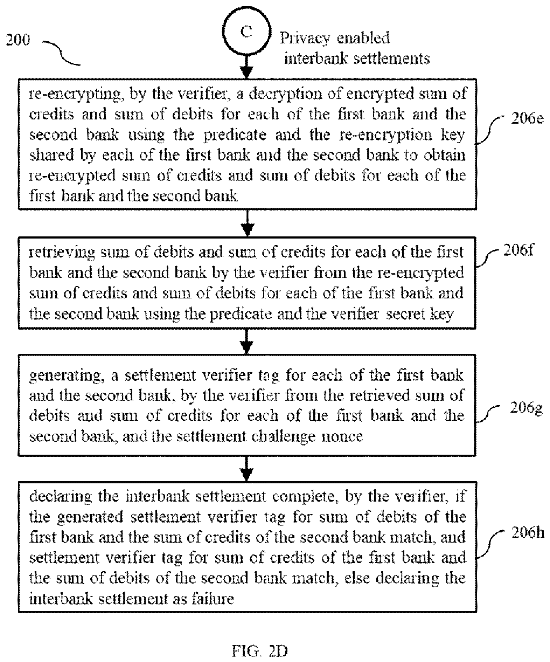

Although the database 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 4.

FIGS. 2A through 2D (collectively referred as FIG. 2) is a flow diagram illustrating a method for leveraging blockchain and the CH-PRE for enhanced transaction privacy and auditing, using the system depicted in FIG. 1, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the processor implemented method 200, at step 202 of the method 200, the one or more hardware processors 104 are configured to detecting, by the subnetwork within the blockchain network controlled by one or more hardware processors, initiation of a bilateral transaction request. The bilateral transaction request can be one of: (a) an inter-bank fund transfer from a first customer of a first bank to second customer of a second bank with a privacy enabled auditing by a verifier, and (b) privacy enabled inter-bank settlements between the first bank and the second bank, wherein subnetwork comprises the first bank, the second bank and the verifier participating in the subnetwork via associated node.

As mentioned, the method is based on CH-PRE approach the first bank, the second bank and the verifier involved in transaction and auditing individually own a Conditional Homomorphic Proxy Re-encryption (CH-PRE) key pair comprising a public key stored on the blockchain and a secret key;

Upon receiving the transaction request, the steps 204a-d are executed for the privacy enabled auditing of the inter-bank fund transfer request. Whereas the steps 206a-h explain the process flow for executing the privacy enabled auditing of the inter-bank settlement request.

STEPS 204a-d explained in conjunction with FIG. 3A and 3B.

Thus, if the bilateral transaction request is the inter-bank fund transfer for a transaction amount, then at step 204a the first bank and the second bank, via the associated node controlled by the one or more hardware processors, execute a smart contract to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer.

The encrypted first current balance and the encrypted transaction amount at the first encryption instance is obtained by encrypting a first current balance of the first customer using the bank public key from the CH-PRE key pair and a dummy predicate with unity value. The encrypted second current balance and the encrypted transaction amount at first encryption instance is obtained by encrypting a second current balance of the second customer using the bank public key of the second bank from the CH-PRE key pair and the dummy predicate with unity value.

As depicted in FIG. 3A in an example scenario where the first customer ($C_A$) of Bank A (first bank) wishes to transfer an amount of $T$ (transaction amount) to the second customer ($C_B$) of Bank B (second bank). $C_A$ initiates a transaction to transfer funds to $C_B$. $t_1 : C_A \xrightarrow{T} C_B$

Bank A side: This transaction is validated by nodes of Bank A and encrypts current balance $U_A$ and transfer amount $T$ using CH-PRE scheme under $pk_A$ and a dummy predicate $p = 1$ to get:

$$E_{pkA}(U_A) = encrypt(U_A, pk_A, p) \text{ (encrypted first current balance)} \qquad (8)$$

$$E_{pkA}(T) = encrypt(T, pk_A, p) \text{ (encrypted transaction amount - first encryption instance when predicate = 1)} \qquad (9)$$

One of the nodes executes the smart contract which calls the CH-PRE computation module that deducts $E_{pkA}(T)$ from current balance $E_{pkA}(U_A)$ of $C_A$ to get new balance $E_{pkA}(U_A')$:

$$E_{pkA}(U_A) - E_{pkA}(T) = E_{pkA}(U_A') \text{ (encrypted first updated balance )} \qquad (10)$$

Bank B side: This transaction is also validated by Bank B and encrypts current balance UB and transfer amount T using CH-PRE scheme under pkB and a dummy predicate p = 1 to get:

$$E_{pkB}(U_B) = encrypt(U_B, p_{kB}, p) \text{ (encrypted second current balance)} \qquad (11)$$

$$E_{pkB}(T) = encrypt(T,pkB,p) \text{ (encrypted transaction amount first encryption instance)} \qquad (12)$$

One of the nodes run the smart contract which calls the CH-PRE computation module that adds $E_{pkB}(T)$ to the current balance $E_{pkB}(U_B)$ of customer of Bank B $C_B$, to get new balance $E_{pkB}(U_B')$:

$$E_{pkB}(U_B) + E_{pkB}(T) = E_{pkB}(U_B') \text{ (encrypted second updated balance)} \quad (13)$$

At step 204b the first bank and the second bank, via the associated node controlled by the one or more hardware processors 104, encrypt (second encryption instance) the transaction amount to get *(c1 c2)*. Thus, the second encryption instance refers to decrypting the transaction amount encrypted during first instance with dummy predicate and again encrypting it using the new predicate value.

The first bank uses a CH-PRE function having a first predicate comprising a tuple (a transaction Identifier (txid), a user ID and a bank ID) and the second bank using a CH-PRE function having the second predicate comprising the tuple, to obtain an encrypted transaction amount associated with a second encryption instance.

Conditional homomorphic proxy reencryption schemes incorporate encryption conditions as a fundamental aspect of their functionality and security. Without inclusion of an encryption condition, CH-PRE will be same as other proxy reencryption schemes (such as H-PRE).

The method disclosed herein brings in conditions into the protocol in-order to restrict verifier to re-encrypt and decrypt customer balances from blockchain. The meaningful condition (txid, UID, Bank ID) in second scenario enables the verifier to decrypt only the information that is needed for the audit purpose. Remaining data (customer balances) the verifier does not require for verification is encrypted using a dummy predicate (as the verifier has the re-encryption key with meaningful condition, therefore, the verifier cannot decrypt customer balances that are encrypted using the dummy predicate).

After receiving the encrypted updated balance $E_{pkA}(U_A')$ from the CH-PRE module (as depicted in FIG. 3A) of the smart contract, Bank A encrypts the transfer amount $T$ using CH-PRE encryption function with predicate $p = txid\|user-id\|bankid,$

$$c1 = encrypt(T,pk_A,p) \qquad (14)$$

After receiving the encrypted updated balance $E_{pkB}(U_B')$ from CH-PRE module of the smart contract, Bank B encrypts the transfer amount $T$ using CH-PRE encryption function with predicate $p = txid\|userid\|bankid,$

$$c2 = encrypt(T,pk_B,p) \qquad (15)$$

At step 204c the first bank and the second bank, via the associated node controlled by the one or more hardware processors 104, store the encrypted first updated balance and the encrypted transaction amount. Thus, the encrypted first updated balance and the encrypted transaction amount associated with the second encryption instance is stored by the first bank, and ii) the encrypted second updated balance and the encrypted transaction amount associated with the second encryption instance is stored by the second bank on the blockchain network on node state database. For example, Hyperledger Fabric currently supports couchDB and levelDB as state database.

Bank A stores the new balance $E_{pkA}(U_4')$ and $c1$ on to blockchain. Previous balance $E_{pkA}(U_A)$ stored on world state is updated with the new balance $E_{pkA}(U_A')$. Similarly, Bank B stores new encrypted updated balance $E_{pkA}(U_B')$ and c2 on to blockchain.

Previous balance $E_{pkB}(U_B)$ stored on world state is updated with the new balance $E_{pkB}(U'_B)$ ). It is assumed that debits and credits are stored independently on blockchain which are used later during the inter-bank settlement.

Note that *txid* in predicate *p* is used to validate the challenged transaction ID sent by the verifier. *userid* is used to retrieve all the transactions pertaining to a challenged user. Similarly, *bankid* is used to retrieve all the transactions performed by a bank. The predicate is used while generating the re-encryption key *rekeygen,* that ensures other messages encrypted under any other predicate, other than the one used while generating the re-encryption key will not be decrypted by the verifier. These ciphertexts are publicly available on blockchain and can be queried by any entity. Predicate ensures that even though these ciphertexts can be queried from blockchain by any entity, they can be decrypted only by an entity that is entitled to see the message.

At step 204d the verifier, via the associated node controlled by the one or more hardware processors 104, performs the privacy enabled auditing for the inter-bank fund transfer if the detected bilateral transaction request is the inter-bank fund transfer for a transaction amount. The privacy enabled auditing comprising steps of:

a) Challenging, the first bank and the second bank by the verifier on the inter-bank fund transfer using the transaction IDs and a challenge nonce ( random nonce).

b) Generating by each of the first bank and the second bank and sharing with the verifier i) a tag or authenticator computed by bank (c1 and c2 from equation 14 and 15) using the challenge nonce and the second encrypted transaction amount queried from the blockchain equation 14 and 15 and ii) a reencryption key (equation 17 and 19), using a bank secret key, a bank public key, a verifier public key and the predicate.

c) Re-encrypting (c1' c2' equation 20 and 22), by the verifier, the second encrypted transaction amount for each of the first bank and the second bank using the predicate and the re-encryption key shared by each of the first bank and the second bank to obtain re-encrypted transaction amount for each of the first bank and the second bank.

d) Retrieving the transaction amount by the verifier from the re-encrypted transaction amount using the predicate and a verifier secret key

$$[T=decrypt(c1',sk_V,p) \text{ and } T = decrypt(c2',sk_V,p)] .$$

e) Generating a verifier tag (equation 21 and 23, $tag_{VA}$ and $tag_{VB}$) for each of the first bank and the second bank, by the verifier from the retrieved transaction amount and the challenge nonce.

f) Declaring an audit of the transaction amount as successful, by the verifier, if the generated verifier tag of each of the first bank and the second bank match (equation 24), else declaring the audit as failure.

As depicted in FIG. 3B, the auditing of the transfer of funds (steps a to f above) by the verifier is explained below.

**Proof Generation:** During a transaction audit, the verifier sends a challenge to bank A with transaction ID *(txid)* and random nonce *(N)*. Bank A queries blockchain to get $c1$ and computes authenticators/tags as follows:

$$tag_A = Hmac(decrypt(c1),N) \qquad\qquad (16)$$

For the purpose of audit, Bank A generates re-encryption key using Bank A's secret key, Bank A's public key, auditor's public key and predicate {p == *txid‖userid‖bankid*} using

$$rekeygen: rk_A = \text{rekeygen}(sk_A,pk_A,pk_V,p) \qquad\qquad (17)$$

Bank A sends $tag_A$ and $rk_A$ to the verifier. Similarly, the verifier also sends a challenge to bank B with transaction ID *(txid)* and random nonce *(N)*. Bank B queries blockchain to get c2 and computes authenticators as follows:

$$tag_B = Hmac(decrypt(c2),N) \qquad\qquad (18)$$

For the purpose of audit, Bank B generates re-encryption key using Bank B's secret key, Bank B's public key, verifier's public key and predicate {p == *txid‖userid‖bankid*} using

$$rekeygen: rk_B = \text{rekeygen}(sk_B,pk_B,pk_V,p) \qquad\qquad (19)$$

Bank B sends $tag_B$ and $rk_B$ to the verifier.

**Proof Verification:** As part of auditing process, regulatory authority such as RBI receives verifiable proof and re-encryption keys ($tag_A$, $rk_A$, $tag_B$, $rk_B$) from Bank A and Bank B to audit the correctness of transaction, say $t_1$. Verifier queries blockchain to get $c1$ and re-encrypts ciphertext $c1$ under conditional homomorphic proxy reencryption with a predicate {p == *txid‖userid‖bankid*} and re-encryption key $rk_A$ to get

$$c1' = \text{reencrypt}(c1,rk_A,p) \qquad\qquad (20)$$

Using the secret key $sk_V$, verifier decrypts the $c1'$ under predicate p using $decrypt(c1',skv,p)$ to get $T$. Verifier computes tag using the transfer amount $T$ and challenge nonce N shared with Bank A as follows:

$$tag_{VA} = Hmac(T,N) \qquad\qquad (21)$$

Verifier queries blockchain to get ciphertext c2 and re-encrypts ciphertext c2 under conditional homomorphic proxy reencryption with a predicate {p == *txid‖userid‖bankid*} and re-encryption key $rk_B$ to get

$$c2' = \text{reencrypt}(c2, rk_B, p) \tag{22}$$

Using the secret key $sk_V$, verifier decrypts the c2' under predicate $p$ using $T = decrypt(c2', sk_V, p)$ to get transfer amount $T$. Verifier computes tag using the transfer amount $T$ and challenge nonce $N$ shared with Bank B as follows:

$$tag_{VB} = Hmac(T, N) \tag{23}$$

Finally, to mark that transaction audit is successful, verifier compares the two tags $tag_{VA} == tag_A$ and $tag_{VB} == tag_B$ to get the verification result as *verification success* or *verification fail*. The verifier updates audit status *(verification success* or *verification fail)* on to the blockchain only if both the tags

$$(tag_{VA} == tag_A \text{ and } tag_{VB} == tag_B) \text{ match successfully} \tag{24},$$

which can be reused by other verifiers during the audits.

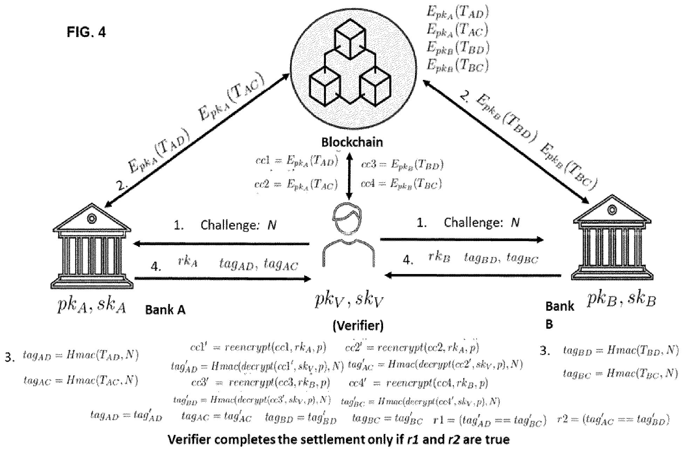

If at step 202, the bilateral transaction request is privacy enabled inter-bank settlements between the first bank and the second bank, the method performs the STEPS 206a-h explained below in conjunction with FIG. 4.

At step 206a of the method 200, the first bank and the second bank via the associated node controlled by the one or more hardware processors 104, executes a smart contract querying encrypted debits and credits of the first bank and the second bank to obtain encrypted sum of credits and sum of debits for each of the first bank and the second bank in a settlement cycle. The encrypted sum of credits and sum of debits are encrypted under a first public key of the first bank and a second public key of the second bank from the CH-PRE key pair.

$E_{pkA}(T_{AD})$ : Sum of all debits at Bank A encrypted under $pk_A$
$E_{pkA}(T_{AC})$ : Sum of all credits at Bank A encrypted under $pk_A$
$E_{pkB}(T_{BD})$ : Sum of all debits at Bank B encrypted under $pk_B$
$E_{pkB}(T_{BC})$ : Sum of all credits at Bank B encrypted under $pk_B$

At step 206b of the method 200, the first bank and the second bank via the associated node controlled by the one or more hardware processors 104, store the encrypted sum of credits and sum of debits for each of the first bank and the second bank on the blockchain.

At step 206c of the method 200, the verifier challenges the first bank and the second bank for the privacy enabled inter-bank settlement using a settlement challenge nonce ( includes random challenge nonce (N) and bank ID).

At step 206d of the method 200 each of the first bank and the second bank generates and shares with the verifier a settlement bank tag by using the settlement challenge nonce and a decryption of encrypted sum of credits and sum of debits using the bank secret key, and ii) a re-encryption key using the bank secret key, the bank public key, verifier public key and the predicate.

Bank A queries the blockchain to get encrypted sum of debits $E_{pkA}(T_{AD})$ and encrypted sum of credits $E_{pkA}(T_{AC})$. As a proof of debits and credits for that settlement cycle, Bank A computes $tag_{AD}$ and $tag_{AC}$ by decrypting $E_{pkA}(T_{AD})$ and $E_{pkA}(T_{AC})$ using Bank A's secret key $sk_A$ as follows:

$$tag_{AD} = Hmac(T_{AD}, N) \tag{25}$$

$$tag_{AC} = Hmac(T_{AC}, N) \tag{26}$$

Similarly, Bank B computes $tag_{BD}$ and $tag_{BC}$ as follows:

$$tag_{BD} = Hmac(T_{BD}, N) \tag{27}$$

$$tag_{BC} = Hmac(T_{BC}, N) \tag{28}$$

Bank A sends $tag_{AD}$, $tag_{AC}$ and $rk_A$ to the verifier. Bank B sends $tag_{BD}$, $tag_{BC}$ and $rk_B$ to the verifier.

At step 206e of the method 200, the verifier re-encrypts a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank.

At step 206f of the method 200, the verifier retrieves sum of debits and sum of credits for each of the first bank and the second bank from the re-encrypted sum of credits and sum of debits for each of the first bank and the second bank using the predicate and the verifier secret key. The verifier generates a public and private key pair (pkV,skV) using CH-PRE scheme.

At step 206g of the method 200, the verifier generates a settlement verifier tag for each of the first bank and the second bank, by the verifier from the retrieved sum of debits and sum of credits for each of the first bank and the second bank, and the settlement challenge nonce.

After receiving proofs and re-encryption keys from Bank A and Bank B, Verifier retrieves $cc1 = E_{pkA}(T_{AD})$ and $cc2 = E_{pkA}(T_{AC})$ from blockchain and re-encrypts them using $rk_A$, $cc1' = reencrypt(cc1,rk_A,p)$ and $cc2' = reencrypt(cc2,rk_A,p)$. Verifier computes

$$tag_{AD}' = Hmac(decrypt(cc1',sk_V,p),N) \qquad (29)$$

$$tag_{AC}' = Hmac(decrypt(cc2',sk_V,p),N) \qquad (30)$$

Similarly, verifier computes re-encrypted ciphertexts $cc3' = reencrypt(cc3,rk_B,p)$, and $cc4' = reencrypt(cc4,rk_B,p)$ for Bank B corresponding to $cc3 = E_{pkB}(T_{BD})$, $cc4 = E_{pkB}(T_{BC})$ and computed tags as follows:

$$tag_{BD}' = Hmac(decrypt(cc3',sk_V,p),N) \qquad (31)$$

$$tag_{BC}' = Hmac(decrypt(cc4',sk_V,p),N) \qquad (32)$$

At step 206h of the method 200, the verifier declares the inter-bank settlement complete, if the generated settlement verifier tag for sum of debits of the first bank and the sum of credits of the second bank match, and settlement verifier tag for sum of credits of the first bank and the sum of debits of the second bank match, else declaring the inter-bank settlement as failure. Thus, finally, the verifier such as RBI performs settlement by comparing $r1 = (tag_{AD} == tag_{BD})$ and $r2 = (tag_{AC} == tag_{BC})$. RBI completes the settlement only if both $r1$ and $r2$ are *true* and transfers the difference in balance amount to corresponding bank.

Thus, the method and system disclosed herein presents a protocol for private auditable transactions and inter-bank settlements using CH-PRE and blockchain. CH-PRE eliminates the need for storing customer balance on private data collections. The protocol enables to store balances encrypted using bank's public key and store it on global blockchain. FHE allows to perform operations such as debits and credits on user balances without the need to reveal plaintext. CH-PRE allows a regulatory authority such as RBI to audit and verify the transactions at user and bank levels without the need to access customer information such as balances. Blockchain enables auditable tamperproof recordkeeping allowing transparency and accountability. The system provides enhanced security by transforming encrypted data without revealing underlying plaintext. The system offers improved privacy, efficiency and better transparency and accountability during the inter-bank settlement process.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for transaction privacy and auditing, the method comprising:

   detecting (202), by a subnetwork within a blockchain network controlled by one or more hardware processors, initiation of a bilateral transaction request comprising one of: (a) an inter-bank fund transfer from a first customer of a first bank to a second customer of a second bank with a privacy enabled auditing by a verifier, and (b) privacy enabled inter-bank settlements between the first bank and the second bank, wherein the first bank, the second bank and the verifier participate in the subnetwork via an associated node, and wherein the first bank, the second bank and the verifier individually own a Conditional Homomorphic Proxy Re-encryption (CH-PRE) key pair comprising a public key stored on the blockchain and a secret key;

   executing (204a), by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer;

   encrypting (204b), by the first bank and the second bank via the associated node controlled by the one or more hardware processors, the transaction amount , wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance;

   storing (204c), via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance; and

   performing (204d), by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of:

   a) challenging, the first bank and the second bank by the verifier on the inter-bank fund transfer using the transaction IDs and a challenge nonce;

b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate;

c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank;

d) retrieving the transaction amount by the verifier from the re-encrypted transaction amount using the predicate and a verifier secret key;

e) generating, a verifier tag for each of the first bank and the second bank, by the verifier based on retrieved transaction amount and the challenge nonce; and

f) declaring an audit of the transaction amount as successful, by the verifier, if the generated verifier tag of each of the first bank and the second bank match, else declaring the audit as failure.

2. The processor implemented method of claim 1, wherein if the bilateral transaction request is privacy enabled inter-bank settlements between the first bank and the second bank, the method performs the steps comprising:

executing (206a) a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair;

storing (206b) the encrypted sum of credits and sum of debits for each of the first bank and the second bank on the blockchain;

challenging (206c) the first bank and the second bank by the verifier for the privacy enabled inter-bank settlement using a settlement challenge nonce;

generating (206d) by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate;

re-encrypting (206e), by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank;

retrieving (206f) sum of debits and sum of credits for each of the first bank and the second bank by the verifier from the re-encrypted sum of credits and sum of debits for each of the first bank and the second bank using the predicate and the verifier secret key;

generating (206g) a settlement verifier tag for each of the first bank and the second bank, by the verifier from the retrieved sum of debits and sum of credits for each of the first bank and the second bank, and the settlement challenge nonce; and

declaring (206h) the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

3. The processor implemented method of claim 1,

wherein the encrypted first current balance and the encrypted transaction amount at the first encryption instance is obtained by encrypting a first current balance of the first customer using the bank public key from the CH-PRE key pair and a dummy predicate with unity value; and

wherein the encrypted second current balance and the encrypted transaction amount at first encryption instance is obtained by encrypting a second current balance of the second customer using the bank public key of the second bank from the CH-PRE key pair and the dummy predicate with unity value.

4. The processor implemented method of claim 1, wherein the tuple enables privacy enabled auditing by the verifier, and wherein transaction ID is used to validate a challenged transaction ID sent by the verifier, the user ID is used to retrieve all transactions pertaining to a challenged customer and bank ID is used to retrieve all transactions performed by a bank.

5. A system (100) for transaction privacy and auditing, the system (100) comprising:

a subnetwork, within a blockchain network controlled by one or more hardware processors (104), comprising a first bank, a second bank and a verifier participating in the subnetwork via an associated node coupled, wherein the one or more hardware processors (104) is coupled to a memory (102) via one or more I/O interfaces (106), wherein the one or more hardware processors (104) are configured by the instructions to:

detect initiation of a bilateral transaction request comprising one of: (a) an inter-bank fund transfer from a first customer of the first bank to a second customer of the second bank with a privacy enabled auditing by the verifier, and (b) privacy enabled inter-bank settlements between the first bank and the second bank, wherein the first bank, the second bank and the verifier individually own a Conditional Homomorphic Proxy Re-encryption (CH-PRE) key pair comprising a public key stored on the blockchain and a secret key;

execute, by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer;

encrypt by the first bank and the second bank via the associated node controlled by the one or more hardware processors, the transaction amount, wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance;

store via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance; and

perform by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of:

a) challenging, the first bank and the second bank by the verifier on the inter-bank fund transfer using the transaction IDs and a challenge nonce;

b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate;

c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank;

d) retrieving the transaction amount by the verifier from the re-encrypted transaction amount using the predicate and a verifier secret key;

e) generating, a verifier tag for each of the first bank and the second bank, by the verifier based on retrieved transaction amount and the challenge nonce; and

f) declaring an audit of the transaction amount as successful, by the verifier, if the generated verifier tag of each of the first bank and the second bank match, else declaring the audit as failure.

6. The system of claim 5, wherein the one or more hardware processors (104) are configured to perform, if the bilateral transaction request is privacy enabled inter-bank settlements between the first bank and the second bank, the steps comprising:

executing a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair;

storing the encrypted sum of credits and sum of debits for each of the first bank and the second bank on the blockchain;

challenging the first bank and the second bank by the verifier for the privacy enabled inter-bank settlement using a settlement challenge nonce;

generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate;

re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank;

retrieving sum of debits and sum of credits for each of the first bank and the second bank by the verifier from the re-encrypted sum of credits and sum of debits for each of the first bank and the second bank using the predicate and the verifier secret key;

generating a settlement verifier tag for each of the first bank and the second bank, by the verifier from the retrieved sum of debits and sum of credits for each of the first bank and the second bank, and the settlement challenge nonce; and

declaring the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

7. The system as claimed in claim 5,

wherein the encrypted first current balance and the encrypted transaction amount at the first encryption instance is obtained by encrypting a first current balance of the first customer using the bank public key from the CH-PRE key pair and a dummy predicate with unity value; and

wherein the encrypted second current balance and the encrypted transaction amount at first encryption instance is obtained by encrypting a second current balance of the second customer using the bank public key of the second bank from the CH-PRE key pair and the dummy predicate with unity value.

8. The system as claimed in claim 5, wherein the tuple enables privacy enabled auditing by the verifier, and wherein transaction ID is used to validate a challenged transaction ID sent by the verifier, the user ID is used to retrieve all transactions pertaining to a challenged customer and bank ID is used to retrieve all transactions performed by a bank.

9. One or more non-transitory machine-readable information storage mediums comprising one or more instructions which when executed by one or more hardware processors cause:

detecting, by a subnetwork within a blockchain network controlled by one or more hardware processors, initiation of a bilateral transaction request comprising one of: (a) an inter-bank fund transfer from a first customer of a first bank to a second customer of a second bank with a privacy enabled auditing by a verifier, and (b) privacy enabled inter-bank settlements between the first bank and the second bank, wherein the first bank, the second bank and the verifier participate in the subnetwork via an associated node, and wherein the first bank, the second bank and the verifier individually own a Conditional Homomorphic Proxy Re-encryption (CH-PRE) key pair comprising a public key stored on the blockchain and a secret key;

executing, by the first bank and the second bank via the associated node controlled by the one or more hardware processors, a smart contract, if the bilateral transaction request is the inter-bank fund transfer for a transaction amount, wherein the smart contract is executed to i) deduct an encrypted first current balance of a first customer by an encrypted transaction amount encrypted at a first encryption instance to obtain an encrypted first updated balance, and ii) add the first encrypted transaction amount to an encrypted second current balance to obtain an encrypted second updated balance for the second customer;

encrypting, by the first bank and the second bank via the associated node controlled by the one or more hardware processors, the transaction amount , wherein i) the first bank uses a CH-PRE function having a first predicate comprising a tuple (a transaction Identifier (txid), a user ID and a bank ID) and ii) the second bank uses the CH-PRE function having the second predicate comprising the tuple, to obtain an encrypted transaction amount associated with a second encryption instance;

storing, via the associated node controlled by the one or more hardware processors, i) by the first bank the encrypted first updated balance and the encrypted transaction amount associated with the second encryption instance, and ii) by the second bank the encrypted second updated balance and the encrypted transaction amount associated with the second encryption instance; and

performing, by the verifier via the associated node in the subnetwork, the privacy enabled auditing for the inter-bank fund transfer if the detected bilateral transaction request is the inter-bank fund transfer for a transaction amount, wherein the privacy enabled auditing comprising steps of:

EP 4 513 824 B1

a) challenging, the first bank and the second bank by the verifier on the inter-bank fund transfer using the transaction IDs and a challenge nonce;

b) generating by each of the first bank and the second bank, and sharing with the verifier i) a tag computed by bank using the challenge nonce and the second encrypted transaction amount queried from the blockchain, and ii) a re-encryption key using a bank secret key, a bank public key, a verifier public key and the predicate;

c) re-encrypting, by the verifier, the second encrypted transaction amount for each of the first bank and the second bank using the predicate and the re-encryption key shared by each of the first bank and the second bank to obtain re-encrypted transaction amount for each of the first bank and the second bank;

d) retrieving the transaction amount by the verifier from the re-encrypted transaction amount using the predicate and a verifier secret key;

e) generating, a verifier tag for each of the first bank and the second bank, by the verifier based on retrieved transaction amount and the challenge nonce; and

f) declaring an audit of the transaction amount as successful, by the verifier, if the generated verifier tag of each of the first bank and the second bank match, else declaring the audit as failure.

10. The one or more non-transitory machine-readable information storage mediums of claim 9, performing steps, if the bilateral transaction request is privacy enabled inter-bank settlements between the first bank and the second bank, the steps comprising:

executing a smart contract querying encrypted debits and credits of the first bank and the second bank to obtain encrypted sum of credits and sum of debits for each of the first bank and the second bank in a settlement cycle, encrypted under a first public key of the first bank and a second public key of the second bank from the CH-PRE key pair;

storing the encrypted sum of credits and sum of debits for each of the first bank and the second bank on the blockchain;

challenging the first bank and the second bank by the verifier for the privacy enabled inter-bank settlement using a settlement challenge nonce;

generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, the bank public key, verifier public key and the predicate;

re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank;

retrieving sum of debits and sum of credits for each of the first bank and the second bank by the verifier from the re-encrypted sum of credits and sum of debits for each of the first bank and the second bank using the predicate and the verifier secret key;

generating a settlement verifier tag for each of the first bank and the second bank, by the verifier from the retrieved sum of debits and sum of credits for each of the first bank and the second bank, and the settlement challenge nonce; and

declaring the inter-bank settlement complete, by the verifier, if the generated settlement verifier tag for sum of debits of the first bank and the sum of credits of the second bank match, and settlement verifier tag for sum of credits of the first bank and the sum of debits of the second bank match, else declaring the inter-bank settlement as failure.

11. The one or more non-transitory machine-readable information storage mediums of claim 9,

wherein the encrypted first current balance and the encrypted transaction amount at the first encryption instance is obtained by encrypting a first current balance of the first customer using the bank public key from the CH-PRE key pair and a dummy predicate with unity value; and

wherein the encrypted second current balance and the encrypted transaction amount at first encryption instance is obtained by encrypting a second current balance of the second customer using the bank public key of the second bank from the CH-PRE key pair and the dummy predicate with unity value.

12. The one or more non-transitory machine-readable information storage mediums of claim 9, wherein the tuple enables privacy enabled auditing by the verifier, and wherein transaction ID is used to validate a challenged transaction ID sent by the verifier, the user ID is used to retrieve all transactions pertaining to a challenged customer and bank ID is used to retrieve all transactions performed by a bank.

18

**Patentansprüche**

1. Prozessorimplementiertes Verfahren (200) zur Transaktionsprivatsphäre und - prüfung, wobei das Verfahren umfasst:

Erfassen (202), durch ein Teilnetzwerk innerhalb eines Blockchain-Netzwerks, das von einem oder mehreren Hardwareprozessoren gesteuert wird, der Einleitung einer bilateralen Transaktionsanforderung, die eines von Folgendem umfasst: (a) eine Interbank-Fondsüberweisung von einem ersten Kunden einer ersten Bank zu einem zweiten Kunden einer zweiten Bank mit einer privatsphärenfähigen Prüfung durch einen Prüfer, und (b) privatsphärenfähige Interbank-Abrechnungen zwischen der ersten Bank und der zweiten Bank, wobei die erste Bank, die zweite Bank und der Prüfer über einen assoziierten Knoten an dem Teilnetzwerk teilnehmen, und wobei die erste Bank, die zweite Bank und der Prüfer individuell ein bedingtes homomorphes Proxy-Neuverschlüsselungs-(Conditional Homomorphic Proxy ReEncryption, CH-PRE)-Schlüsselpaar besitzen, das einen öffentlichen Schlüssel, der in der Blockchain gespeichert ist, und einen geheimen Schlüssel umfasst;

Ausführen (204a), durch die erste Bank und die zweite Bank über den assoziierten Knoten, der von dem einen oder den mehreren Hardwareprozessoren gesteuert wird, eines intelligenten Vertrags, wenn die bilaterale Transaktionsanforderung die Interbank-Fondsüberweisung für einen Transaktionsbetrag ist, wobei der intelligente Vertrag ausgeführt wird, um i) einen verschlüsselten ersten aktuellen Saldo eines ersten Kunden von einem verschlüsselten Transaktionsbetrag abzuziehen, der an einer ersten Verschlüsselungsinstanz verschlüsselt ist, um einen verschlüsselten ersten aktualisierten Saldo zu erhalten, und ii) den ersten verschlüsselten Transaktionsbetrag zu einem verschlüsselten zweiten aktuellen Saldo hinzuzufügen, um einen verschlüsselten zweiten aktualisierten Saldo für den zweiten Kunden zu erhalten;

Verschlüsseln (204b), durch die erste Bank und die zweite Bank über den assoziierten Knoten, der von dem einen oder den mehreren Hardwareprozessoren gesteuert wird, des Transaktionsbetrags, wobei i) die erste Bank eine CH-PRE-Funktion mit einem ersten Prädikat verwendet, das ein Tupel (eine Transaktions-ID (txid), eine Benutzer-ID und eine Bank-ID) umfasst, und ii) die zweite Bank die CH-PRE-Funktion mit dem zweiten Prädikat verwendet, das das Tupel umfasst, um einen verschlüsselten Transaktionsbetrag zu erhalten, der mit einer zweiten Verschlüsselungsinstanz assoziiert ist;

Speichern (204c), über den assoziierten Knoten, der von dem einen oder den mehreren Hardwareprozessoren gesteuert wird, i) durch die erste Bank des verschlüsselten ersten aktualisierten Saldos und des verschlüsselten Transaktionsbetrags, der mit der zweiten Verschlüsselungsinstanz assoziiert ist, und ii) durch die zweite Bank des verschlüsselten zweiten aktualisierten Saldos und des verschlüsselten Transaktionsbetrags, der mit der zweiten Verschlüsselungsinstanz assoziiert ist; und

Durchführen (204d), durch den Verifizierer über den assoziierten Knoten in dem Teilnetzwerk, der datenschutzfähigen Prüfung für die Interbank-Fondsüberweisung, wenn die detektierte bilaterale Transaktionsanforderung die Interbank-Fondsüberweisung für einen Transaktionsbetrag ist, wobei die datenschutzfähige Prüfung die folgenden Schritte umfasst:

a) Abfragen der ersten Bank und der zweiten Bank durch den Verifizierer bei der Interbank-Fondsüberweisung unter Verwendung der Transaktions-IDs und einer Abfrage-Nonce;
b) Erzeugen, durch jede der ersten Bank und der zweiten Bank, und Teilen mit dem Verifizierer i) eines Tags, das von der Bank unter Verwendung der Abfrage-Nonce und des zweiten verschlüsselten Transaktionsbetrags berechnet wird, der von der Blockchain abgefragt wird, und ii) eines Neuverschlüsselungsschlüssels unter Verwendung eines Bankgeheimschlüssels, eines öffentlichen Bankschlüssels, eines öffentlichen Verifiziererschlüssels und des Prädikats;
c) Neuverschlüsseln, durch den Verifizierer, des zweiten verschlüsselten Transaktionsbetrags für jede der ersten Bank und der zweiten Bank unter Verwendung des Prädikats und des Neuverschlüsselungsschlüssels, die von jeder der ersten Bank und der zweiten Bank geteilt werden, um einen neuverschlüsselten Transaktionsbetrag für jede der ersten Bank und der zweiten Bank zu erhalten;
d) Abrufen des Transaktionsbetrags durch den Verifizierer aus dem neuverschlüsselten Transaktionsbetrag unter Verwendung des Prädikats und eines geheimen Verifiziererschlüssels;
e) Erzeugen eines Verifizierer-Tags für jede der ersten Bank und der zweiten Bank durch den Verifizierer basierend auf dem abgerufenen Transaktionsbetrag und der Abfrage-Nonce; und
f) Deklarieren einer Prüfung des Transaktionsbetrags als erfolgreich durch den Verifizierer, wenn das erzeugte Verifizierer-Tag von jeder der ersten Bank und der zweiten Bank übereinstimmt, ansonsten Deklarieren der Prüfung als fehlgeschlagen.

2. Prozessorimplementiertes Verfahren nach Anspruch 1, wobei, wenn die bilaterale Transaktionsanforderung datenschutzfähige Interbank-Abrechnungen zwischen der ersten Bank und der zweiten Bank ist, das Verfahren die folgenden Schritte durchführt:

Ausführen (206a) eines intelligenten Vertrags, der verschlüsselte Debits und Kredite der ersten Bank und der zweiten Bank abfragt, um eine verschlüsselte Summe von Krediten und eine Summe von Debits für jede der ersten Bank und der zweiten Bank in einem Abrechnungszyklus zu erhalten, die unter einem ersten öffentlichen Schlüssel der ersten Bank und einem zweiten öffentlichen Schlüssel der zweiten Bank aus dem CH-PRE-Schlüsselpaar verschlüsselt sind;

Speichern (206b) der verschlüsselten Summe von Krediten und der Summe von Debits für jede der ersten Bank und der zweiten Bank in der Blockchain;

Abfragen (206c) der ersten Bank und der zweiten Bank durch den Verifizierer für die datenschutzfähige Interbank-Abrechnung unter Verwendung einer Abrechnungs-Abfrage-Nonce;

Erzeugen (206d), durch jede der ersten Bank und der zweiten Bank und Teilen mit dem Verifizierer i) eines Abrechnungs-Bank-Tags unter Verwendung der Abrechnungs-Abfrage-Nonce und einer Entschlüsselung der verschlüsselten Summe von Krediten und der Summe von Debits unter Verwendung des Bankgeheimschlüssels, und ii) eines Neuverschlüsselungsschlüssels unter Verwendung des Bankgeheimschlüssels, des öffentlichen Bankschlüssels, des öffentlichen Verifiziererschlüssels und des Prädikats;

Neuverschlüsseln (206e), durch den Verifizierer, einer Entschlüsselung der verschlüsselten Summe von Krediten und der Summe von Debits für jede der ersten Bank und der zweiten Bank unter Verwendung des Prädikats und des Neuverschlüsselungsschlüssels, die von jeder der ersten Bank und der zweiten Bank geteilt werden, um eine neuverschlüsselte Summe von Krediten und eine Summe von Debits für jede der ersten Bank und der zweiten Bank zu erhalten;

Abrufen (206f) der Summe von Debits und der Summe von Krediten für jede der ersten Bank und der zweiten Bank durch den Verifizierer aus der neuverschlüsselten Summe von Krediten und der Summe von Debits für jede der ersten Bank und der zweiten Bank unter Verwendung des Prädikats und des geheimen Verifiziererschlüssels;

Erzeugen (206g) eines Abrechnungs-Verifizierer-Tags für jede der ersten Bank und der zweiten Bank durch den Verifizierer aus der abgerufenen Summe von Debits und der Summe von Krediten für jede der ersten Bank und der zweiten Bank und der Abrechnungs-Abfrage-Nonce; und

Deklarieren (206h) der Interbank-Abrechnung als abgeschlossen durch den Verifizierer, wenn das erzeugte Abrechnungs-Verifizierer-Tag für die Summe von Debits der ersten Bank und die Summe von Krediten der zweiten Bank übereinstimmen, und das Abrechnungs-Verifizierer-Tag für die Summe von Krediten der ersten Bank und die Summe von Debits der zweiten Bank übereinstimmen, ansonsten Deklarieren der Interbank-Abrechnung als fehlgeschlagen.

3. Prozessorimplementiertes Verfahren nach Anspruch 1,

wobei der verschlüsselte erste aktuelle Saldo und der verschlüsselte Transaktionsbetrag bei der ersten Verschlüsselungsinstanz durch Verschlüsseln eines ersten aktuellen Saldos des ersten Kunden unter Verwendung des öffentlichen Bankschlüssels aus dem CH-PRE-Schlüsselpaar und eines Dummy-Prädikats mit einem Einheitswert erhalten wird; und

wobei der verschlüsselte zweite aktuelle Saldo und der verschlüsselte Transaktionsbetrag bei der ersten Verschlüsselungsinstanz durch Verschlüsseln eines zweiten aktuellen Saldos des zweiten Kunden unter Verwendung des öffentlichen Bankschlüssels der zweiten Bank aus dem CH-PRE-Schlüsselpaar und des Dummy-Prädikats mit einem Einheitswert erhalten wird.

4. Prozessorimplementiertes Verfahren nach Anspruch 1, wobei das Tupel datenschutzfähige Prüfung durch den Verifizierer ermöglicht, und wobei die Transaktions-ID verwendet wird, um eine abgefragte Transaktions-ID zu validieren, die durch den Verifizierer gesendet wird, die Benutzer-ID verwendet wird, um alle Transaktionen abzurufen, die einen abgefragten Kunden betreffen, und die Bank-ID verwendet wird, um alle Transaktionen abzurufen, die durch eine Bank durchgeführt werden.

5. System (100) zur Transaktionsprivatsphäre und -prüfung, wobei das System (100) umfasst:
ein Teilnetzwerk innerhalb eines Blockchain-Netzwerks, das durch einen oder mehrere Hardwareprozessoren (104) gesteuert wird, umfassend eine erste Bank, eine zweite Bank und einen Verifizierer, die über einen verbundenen Knoten an dem Teilnetzwerk teilnehmen, wobei der eine oder die mehreren Hardwareprozessoren (104) über eine oder mehrere E/A-Schnittstellen (106) mit einem Speicher (102) verbunden sind, wobei der eine oder die mehreren Hardwareprozessoren (104) durch die Anweisungen konfiguriert sind zum:

Erfassen der Einleitung einer bilateralen Transaktionsanforderung, die eines von Folgendem umfasst: (a) eine Interbank-Fondsüberweisung von einem ersten Kunden der ersten Bank zu einem zweiten Kunden der zweiten Bank mit einer privatsphärenfähigen Prüfung durch den Prüfer, und (b) privatsphärenfähige Interbank-Abrechnungen zwischen der ersten Bank und der zweiten Bank, wobei die erste Bank, die zweite Bank und der Prüfer individuell ein bedingtes homomorphes Proxy-Neuverschlüsselungs-(Conditional Homomorphic Proxy Re-Encryption, CH-PRE)-Schlüsselpaar besitzen, das einen öffentlichen Schlüssel, der in der Blockchain gespeichert ist, und einen geheimen Schlüssel umfasst;

Ausführen, durch die erste Bank und die zweite Bank über den assoziierten Knoten, der von dem einen oder den mehreren Hardwareprozessoren gesteuert wird, eines intelligenten Vertrags, wenn die bilaterale Transaktionsanforderung die Interbank-Fondsüberweisung für einen Transaktionsbetrag ist, wobei der intelligente Vertrag ausgeführt wird, um i) einen verschlüsselten ersten aktuellen Saldo eines ersten Kunden von einem verschlüsselten Transaktionsbetrag abzuziehen, der an einer ersten Verschlüsselungsinstanz verschlüsselt ist, um einen verschlüsselten ersten aktualisierten Saldo zu erhalten, und ii) den ersten verschlüsselten Transaktionsbetrag zu einem verschlüsselten zweiten aktuellen Saldo hinzuzufügen, um einen verschlüsselten zweiten aktualisierten Saldo für den zweiten Kunden zu erhalten;

Verschlüsseln, durch die erste Bank und die zweite Bank über den assoziierten Knoten, der von dem einen oder den mehreren Hardwareprozessoren gesteuert wird, des Transaktionsbetrags, wobei i) die erste Bank eine CH-PRE-Funktion mit einem ersten Prädikat verwendet, das ein Tupel (eine Transaktions-ID (txid), eine Benutzer-ID und eine Bank-ID) umfasst, und ii) die zweite Bank die CH-PRE-Funktion mit dem zweiten Prädikat verwendet, das das Tupel umfasst, um einen verschlüsselten Transaktionsbetrag zu erhalten, der mit einer zweiten Verschlüsselungsinstanz assoziiert ist;

Speichern, über den assoziierten Knoten, der von dem einen oder den mehreren Hardwareprozessoren gesteuert wird, i) durch die erste Bank des verschlüsselten ersten aktualisierten Saldos und des verschlüsselten Transaktionsbetrags, der mit der zweiten Verschlüsselungsinstanz assoziiert ist, und ii) durch die zweite Bank des verschlüsselten zweiten aktualisierten Saldos und des verschlüsselten Transaktionsbetrags, der mit der zweiten Verschlüsselungsinstanz assoziiert ist; und

Durchführen, durch den Verifizierer über den assoziierten Knoten in dem Teilnetzwerk, der datenschutzfähigen Prüfung für die Interbank-Fondsüberweisung, wenn die detektierte bilaterale Transaktionsanforderung die Interbank-Fondsüberweisung für einen Transaktionsbetrag ist, wobei die datenschutzfähige Prüfung die folgenden Schritte umfasst:

a) Abfragen der ersten Bank und der zweiten Bank durch den Verifizierer bei der Interbank-Fondsüberweisung unter Verwendung der Transaktions-IDs und einer Abfrage-Nonce;

b) Erzeugen, durch jede der ersten Bank und der zweiten Bank, und Teilen mit dem Verifizierer i) eines Tags, das von der Bank unter Verwendung der Abfrage-Nonce und des zweiten verschlüsselten Transaktionsbetrags berechnet wird, der von der Blockchain abgefragt wird, und ii) eines Neuverschlüsselungsschlüssels unter Verwendung eines Bankgeheimschlüssels, eines öffentlichen Bankschlüssels, eines öffentlichen Verifiziererschlüssels und des Prädikats;

c) Neuverschlüsseln, durch den Verifizierer, des zweiten verschlüsselten Transaktionsbetrags für jede der ersten Bank und der zweiten Bank unter Verwendung des Prädikats und des Neuverschlüsselungsschlüssels, die von jeder der ersten Bank und der zweiten Bank geteilt werden, um einen neuverschlüsselten Transaktionsbetrag für jede der ersten Bank und der zweiten Bank zu erhalten;

d) Abrufen des Transaktionsbetrags durch den Verifizierer aus dem neuverschlüsselten Transaktionsbetrag unter Verwendung des Prädikats und eines geheimen Verifiziererschlüssels;

e) Erzeugen eines Verifizierer-Tags für jede der ersten Bank und der zweiten Bank durch den Verifizierer basierend auf dem abgerufenen Transaktionsbetrag und der Abfrage-Nonce; und

f) Deklarieren einer Prüfung des Transaktionsbetrags als erfolgreich durch den Verifizierer, wenn das erzeugte Verifizierer-Tag von jeder der ersten Bank und der zweiten Bank übereinstimmt, ansonsten Deklarieren der Prüfung als fehlgeschlagen.

6. System nach Anspruch 5, wobei der eine oder die mehreren Hardwareprozessoren (104) konfiguriert sind, um, wenn die bilaterale Transaktionsanforderung datenschutzfähige Interbank-Abrechnungen zwischen der ersten Bank und der zweiten Bank ist, die folgenden Schritte durchzuführen:

Ausführen eines intelligenten Vertrags, der verschlüsselte Debits und Kredite der ersten Bank und der zweiten Bank abfragt, um eine verschlüsselte Summe von Krediten und eine Summe von Debits für jede der ersten Bank und der zweiten Bank in einem Abrechnungszyklus zu erhalten, die unter einem ersten öffentlichen Schlüssel der ersten Bank und einem zweiten öffentlichen Schlüssel der zweiten Bank aus dem CH-PRE-Schlüsselpaar verschlüsselt sind;

Speichern der verschlüsselten Summe von Krediten und der Summe von Debits für jede der ersten Bank und der zweiten Bank in der Blockchain;

Abfragen der ersten Bank und der zweiten Bank durch den Verifizierer für die datenschutzfähige Interbank-Abrechnung unter Verwendung einer Abrechnungs-Abfrage-Nonce;

Erzeugen, durch jede der ersten Bank und der zweiten Bank und Teilen mit dem Verifizierer i) eines Abrechnungs-Bank-Tags unter Verwendung der Abrechnungs-Abfrage-Nonce und einer Entschlüsselung der verschlüsselten Summe von Krediten und der Summe von Debits unter Verwendung des Bankgeheimschlüssels, und ii) eines Neuverschlüsselungsschlüssels unter Verwendung des Bankgeheimschlüssels, des öffentlichen Bankschlüssels, des öffentlichen Verifiziererschlüssels und des Prädikats;

Neuverschlüsseln, durch den Verifizierer, einer Entschlüsselung der verschlüsselten Summe von Krediten und der Summe von Debits für jede der ersten Bank und der zweiten Bank unter Verwendung des Prädikats und des Neuverschlüsselungsschlüssels, die von jeder der ersten Bank und der zweiten Bank geteilt werden, um eine neuverschlüsselte Summe von Krediten und eine Summe von Debits für jede der ersten Bank und der zweiten Bank zu erhalten;

Abrufen der Summe von Debits und der Summe von Krediten für jede der ersten Bank und der zweiten Bank durch den Verifizierer aus der neuverschlüsselten Summe von Krediten und der Summe von Debits für jede der ersten Bank und der zweiten Bank unter Verwendung des Prädikats und des geheimen Verifiziererschlüssels;

Erzeugen eines Abrechnungs-Verifizierer-Tags für jede der ersten Bank und der zweiten Bank durch den Verifizierer aus der abgerufenen Summe von Debits und der Summe von Krediten für jede der ersten Bank und der zweiten Bank und der Abrechnungs-Abfrage-Nonce; und

Deklarieren der Interbank-Abrechnung als abgeschlossen durch den Verifizierer, wenn das erzeugte Abrechnungs-Verifizierer-Tag für die Summe von Debits der ersten Bank und die Summe von Krediten der zweiten Bank übereinstimmen, und das Abrechnungs-Verifizierer-Tag für die Summe von Krediten der ersten Bank und die Summe von Debits der zweiten Bank übereinstimmen, ansonsten Deklarieren der Interbank-Abrechnung als fehlgeschlagen.

7. System nach Anspruch 5,

wobei der verschlüsselte erste aktuelle Saldo und der verschlüsselte Transaktionsbetrag bei der ersten Verschlüsselungsinstanz durch Verschlüsseln eines ersten aktuellen Saldos des ersten Kunden unter Verwendung des öffentlichen Bankschlüssels aus dem CH-PRE-Schlüsselpaar und eines Dummy-Prädikats mit einem Einheitswert erhalten wird; und

wobei der verschlüsselte zweite aktuelle Saldo und der verschlüsselte Transaktionsbetrag bei der ersten Verschlüsselungsinstanz durch Verschlüsseln eines zweiten aktuellen Saldos des zweiten Kunden unter Verwendung des öffentlichen Bankschlüssels der zweiten Bank aus dem CH-PRE-Schlüsselpaar und des Dummy-Prädikats mit einem Einheitswert erhalten wird.

8. System nach Anspruch 5, wobei das Tupel datenschutzfähige Prüfung durch den Verifizierer ermöglicht, und wobei die Transaktions-ID verwendet wird, um eine abgefragte Transaktions-ID zu validieren, die durch den Verifizierer gesendet wird, die Benutzer-ID verwendet wird, um alle Transaktionen abzurufen, die einen abgefragten Kunden betreffen, und die Bank-ID verwendet wird, um alle Transaktionen abzurufen, die durch eine Bank durchgeführt werden.

9. Ein oder mehrere nichtflüchtige maschinenlesbare Informationsspeichermedien, umfassend eine oder mehrere Anweisungen, die, wenn sie durch einen oder mehrere Hardwareprozessoren ausgeführt werden, bewirken:

Erfassen, durch ein Teilnetzwerk innerhalb eines Blockchain-Netzwerks, das von einem oder mehreren Hardwareprozessoren gesteuert wird, der Einleitung einer bilateralen Transaktionsanforderung, die eines von Folgendem umfasst: (a) eine Interbank-Fondsüberweisung von einem ersten Kunden einer ersten Bank zu einem zweiten Kunden einer zweiten Bank mit einer privatsphärenfähigen Prüfung durch einen Prüfer, und (b) privatsphärenfähige Interbank-Abrechnungen zwischen der ersten Bank und der zweiten Bank, wobei die erste Bank, die zweite Bank und der Prüfer über einen assoziierten Knoten an dem Teilnetzwerk teilnehmen, und wobei die erste Bank, die zweite Bank und der Prüfer individuell ein bedingtes homomorphes Proxy-Neuverschlüsselungs-(Conditional Homomorphic Proxy Re-Encryption, CH-PRE)-Schlüsselpaar besitzen, das einen öffentlichen Schlüssel, der in der Blockchain gespeichert ist, und einen geheimen Schlüssel umfasst;

Ausführen, durch die erste Bank und die zweite Bank über den assoziierten Knoten, der von dem einen oder den mehreren Hardwareprozessoren gesteuert wird, eines intelligenten Vertrags, wenn die bilaterale Transaktionsanforderung die Interbank-Fondsüberweisung für einen Transaktionsbetrag ist, wobei der intelligente Vertrag ausgeführt wird, um i) einen verschlüsselten ersten aktuellen Saldo eines ersten Kunden von einem verschlüsselten Transaktionsbetrag abzuziehen, der an einer ersten Verschlüsselungsinstanz verschlüsselt ist, um einen verschlüsselten ersten aktualisierten Saldo zu erhalten, und ii) den ersten verschlüsselten Transaktionsbetrag zu einem verschlüsselten zweiten aktuellen Saldo hinzuzufügen, um einen verschlüsselten zweiten aktualisierten Saldo für den zweiten Kunden zu erhalten;

Verschlüsseln, durch die erste Bank und die zweite Bank über den assoziierten Knoten, der von dem einen oder den mehreren Hardwareprozessoren gesteuert wird, des Transaktionsbetrags, wobei i) die erste Bank eine CH-PRE-Funktion mit einem ersten Prädikat verwendet, das ein Tupel (eine Transaktions-ID (txid), eine Benutzer-ID und eine Bank-ID) umfasst, und ii) die zweite Bank die CH-PRE-Funktion mit dem zweiten Prädikat verwendet, das das Tupel umfasst, um einen verschlüsselten Transaktionsbetrag zu erhalten, der mit einer zweiten Verschlüsselungsinstanz assoziiert ist;

Speichern, über den assoziierten Knoten, der von dem einen oder den mehreren Hardwareprozessoren gesteuert wird, i) durch die erste Bank des verschlüsselten ersten aktualisierten Saldos und des verschlüsselten Transaktionsbetrags, der mit der zweiten Verschlüsselungsinstanz assoziiert ist, und ii) durch die zweite Bank des verschlüsselten zweiten aktualisierten Saldos und des verschlüsselten Transaktionsbetrags, der mit der zweiten Verschlüsselungsinstanz assoziiert ist; und

Durchführen, durch den Verifizierer über den assoziierten Knoten in dem Teilnetzwerk, der datenschutzfähigen Prüfung für die Interbank-Fondsüberweisung, wenn die detektierte bilaterale Transaktionsanforderung die Interbank-Fondsüberweisung für einen Transaktionsbetrag ist, wobei die datenschutzfähige Prüfung die folgenden Schritte umfasst:

a) Abfragen der ersten Bank und der zweiten Bank durch den Verifizierer bei der Interbank-Fondsüberweisung unter Verwendung der Transaktions-IDs und einer Abfrage-Nonce;

b) Erzeugen, durch jede der ersten Bank und der zweiten Bank, und Teilen mit dem Verifizierer i) eines Tags, das von der Bank unter Verwendung der Abfrage-Nonce und des zweiten verschlüsselten Transaktionsbetrags berechnet wird, der von der Blockchain abgefragt wird, und ii) eines Neuverschlüsselungsschlüssels unter Verwendung eines Bankgeheimschlüssels, eines öffentlichen Bankschlüssels, eines öffentlichen Verifiziererschlüssels und des Prädikats;

c) Neuverschlüsseln, durch den Verifizierer, des zweiten verschlüsselten Transaktionsbetrags für jede der ersten Bank und der zweiten Bank unter Verwendung des Prädikats und des Neuverschlüsselungsschlüssels, die von jeder der ersten Bank und der zweiten Bank geteilt werden, um einen neuverschlüsselten Transaktionsbetrag für jede der ersten Bank und der zweiten Bank zu erhalten;

d) Abrufen des Transaktionsbetrags durch den Verifizierer aus dem neuverschlüsselten Transaktionsbetrag unter Verwendung des Prädikats und eines geheimen Verifiziererschlüssels;

e) Erzeugen eines Verifizierer-Tags für jede der ersten Bank und der zweiten Bank durch den Verifizierer basierend auf dem abgerufenen Transaktionsbetrag und der Abfrage-Nonce; und

f) Deklarieren einer Prüfung des Transaktionsbetrags als erfolgreich durch den Verifizierer, wenn das erzeugte Verifizierer-Tag von jeder der ersten Bank und der zweiten Bank übereinstimmt, ansonsten Deklarieren der Prüfung als fehlgeschlagen.

10. Ein oder mehrere nichtflüchtige maschinenlesbare Informationsspeichermedien nach Anspruch 9, die Schritte durchführen, wenn die bilaterale Transaktionsanforderung datenschutzfähige Interbank-Abrechnungen zwischen der ersten Bank und der zweiten Bank ist, wobei die Schritte Folgendes umfassen:

Ausführen eines intelligenten Vertrags, der verschlüsselte Debits und Kredite der ersten Bank und der zweiten Bank abfragt, um eine verschlüsselte Summe von Krediten und eine Summe von Debits für jede der ersten Bank und der zweiten Bank in einem Abrechnungszyklus zu erhalten, die unter einem ersten öffentlichen Schlüssel der ersten Bank und einem zweiten öffentlichen Schlüssel der zweiten Bank aus dem CH-PRE-Schlüsselpaar verschlüsselt sind;

Speichern der verschlüsselten Summe von Krediten und der Summe von Debits für jede der ersten Bank und der zweiten Bank in der Blockchain;

Abfragen der ersten Bank und der zweiten Bank durch den Verifizierer für die datenschutzfähige Interbank-Abrechnung unter Verwendung einer Abrechnungs-Abfrage-Nonce;

Erzeugen, durch jede der ersten Bank und der zweiten Bank und Teilen mit dem Verifizierer i) eines Abrechnungs-Bank-Tags unter Verwendung der Abrechnungs-Abfrage-Nonce und einer Entschlüsselung der verschlüsselten Summe von Krediten und der Summe von Debits unter Verwendung des Bankgeheimschlüssels, und ii) eines Neuverschlüsselungsschlüssels unter Verwendung des Bankgeheimschlüssels, des öffentlichen Bankschlüssels, des öffentlichen Verifiziererschlüssels und des Prädikats;

Neuverschlüsseln, durch den Verifizierer, einer Entschlüsselung der verschlüsselten Summe von Krediten und der Summe von Debits für jede der ersten Bank und der zweiten Bank unter Verwendung des Prädikats und des Neuverschlüsselungsschlüssels, die von jeder der ersten Bank und der zweiten Bank geteilt werden, um eine neuverschlüsselte Summe von Krediten und eine Summe von Debits für jede der ersten Bank und der zweiten Bank zu erhalten;

Abrufen der Summe von Debits und der Summe von Krediten für jede der ersten Bank und der zweiten Bank durch den Verifizierer aus der neuverschlüsselten Summe von Krediten und der Summe von Debits für jede der ersten Bank und der zweiten Bank unter Verwendung des Prädikats und des geheimen Verifiziererschlüssels;

Erzeugen eines Abrechnungs-Verifizierer-Tags für jede der ersten Bank und der zweiten Bank durch den Verifizierer aus der abgerufenen Summe von Debits und der Summe von Krediten für jede der ersten Bank und der zweiten Bank und der Abrechnungs-Abfrage-Nonce; und

Deklarieren der Interbank-Abrechnung als abgeschlossen durch den Verifizierer, wenn das erzeugte Abrechnungs-Verifizierer-Tag für die Summe von Debits der ersten Bank und die Summe von Krediten der zweiten Bank übereinstimmen, und das Abrechnungs-Verifizierer-Tag für die Summe von Krediten der ersten Bank und die Summe von Debits der zweiten Bank übereinstimmen, ansonsten Deklarieren der Interbank-Abrechnung als fehlgeschlagen.

**11.** Ein oder mehrere nichtflüchtige maschinenlesbare Informationsspeichermedien nach Anspruch 9,

wobei der verschlüsselte erste aktuelle Saldo und der verschlüsselte Transaktionsbetrag bei der ersten Verschlüsselungsinstanz durch Verschlüsseln eines ersten aktuellen Saldos des ersten Kunden unter Verwendung des öffentlichen Bankschlüssels aus dem CH-PRE-Schlüsselpaar und eines Dummy-Prädikats mit einem Einheitswert erhalten wird; und

wobei der verschlüsselte zweite aktuelle Saldo und der verschlüsselte Transaktionsbetrag bei der ersten Verschlüsselungsinstanz durch Verschlüsseln eines zweiten aktuellen Saldos des zweiten Kunden unter Verwendung des öffentlichen Bankschlüssels der zweiten Bank aus dem CH-PRE-Schlüsselpaar und des Dummy-Prädikats mit einem Einheitswert erhalten wird.

**12.** Ein oder mehrere nichtflüchtige maschinenlesbare Informationsspeichermedien nach Anspruch 9, wobei das Tupel datenschutzfähige Prüfung durch den Verifizierer ermöglicht, und wobei die Transaktions-ID verwendet wird, um eine abgefragte Transaktions-ID zu validieren, die durch den Verifizierer gesendet wird, die Benutzer-ID verwendet wird, um alle Transaktionen abzurufen, die einen abgefragten Kunden betreffen, und die Bank-ID verwendet wird, um alle Transaktionen abzurufen, die durch eine Bank durchgeführt werden.

**Revendications**

**1.** Procédé mis en œuvre par processeur (200) pour la confidentialité des transactions et l'audit, le procédé comprenant :

la détection (202), par un sous-réseau au sein d'un réseau de chaîne de blocs commandé par un ou plusieurs processeurs matériels, de l'initiation d'une demande de transaction bilatérale comprenant l'un parmi : (a) un transfert de fonds interbancaire d'un premier client d'une première banque à un second client d'une seconde banque avec un audit avec confidentialité activée par un vérificateur, et (b) des règlements interbancaires avec confidentialité activée entre la première banque et la seconde banque, dans lequel première banque, la seconde banque et le vérificateur participent au sous-réseau par l'intermédiaire d'un nœud associé, et dans lequel la première banque, la seconde banque et le vérificateur possèdent individuellement une paire de clés de rechiffrement de mandataire homomorphique conditionnel (CH-PRE) comprenant une clé publique stockée sur la chaîne de blocs et une clé secrète ;

l'exécution (204a), par la première banque et la seconde banque par l'intermédiaire du nœud associé commandé par les un ou plusieurs processeurs matériels, d'un contrat intelligent, si la demande de transaction bilatérale est le transfert de fonds interbancaire pour un montant de transaction, dans lequel le contrat intelligent est exécuté pour i) déduire un premier solde actuel chiffré d'un premier client par un montant de transaction chiffré au niveau d'une première instance de chiffrement pour obtenir un premier solde mis à jour chiffré, et ii) ajouter le premier montant de transaction chiffré à un second solde actuel chiffré pour obtenir un second solde mis à jour chiffré pour le second client ;

le chiffrement (204b), par la première banque et la seconde banque par l'intermédiaire du nœud associé commandé par les un ou plusieurs processeurs matériels, du montant de transaction, dans lequel i) la première banque utilise une fonction CH-PRE ayant un premier prédicat comprenant un tuple (un identifiant de transaction (txid), un ID d'utilisateur et un ID de banque) et ii) la seconde banque utilise la fonction CH-PRE ayant le second prédicat comprenant le tuple, pour obtenir un montant de transaction chiffré associé à une seconde instance de chiffrement ;

le stockage (204c), par l'intermédiaire du nœud associé commandé par les un ou plusieurs processeurs matériels, i) par la première banque du premier solde mis à jour chiffré et du montant de transaction chiffré associé à la seconde instance de chiffrement, et ii) par la seconde banque du second solde mis à jour chiffré et du montant de transaction chiffré associé à la seconde instance de chiffrement ; et

l'exécution (204d), par le vérificateur par l'intermédiaire du nœud associé dans le sous-réseau, de l'audit avec confidentialité activée pour le transfert de fonds interbancaire si la demande de transaction bilatérale détectée est le transfert de fonds interbancaire pour un montant de transaction, dans lequel l'audit avec confidentialité activée comprend les étapes de :

a) l'interrogation, par le vérificateur, de la première banque et de la seconde banque sur le transfert de fonds interbancaire en utilisant les ID de transaction et un nonce d'interrogation ;
b) la génération par chacune de la première banque et de la seconde banque, et le partage avec le vérificateur i) d'une étiquette calculée par banque en utilisant le nonce d'interrogation et le second montant de transaction chiffré interrogé à partir de la chaîne de blocs, et ii) d'une clé de rechiffrement en utilisant une clé secrète de banque, une clé publique de banque, une clé publique de vérificateur et le prédicat ;
c) le rechiffrement, par le vérificateur, du second montant de transaction chiffré pour chacune de la première banque et de la seconde banque en utilisant le prédicat et la clé de rechiffrement partagés par chacune de la première banque et de la seconde banque pour obtenir un montant de transaction rechiffré pour chacune de la première banque et de la seconde banque ;
d) la récupération du montant de transaction par le vérificateur à partir du montant de transaction rechiffré en utilisant le prédicat et une clé secrète de vérificateur ;
e) la génération, par le vérificateur, d'une étiquette de vérificateur pour chacune de la première banque et de la seconde banque, sur la base du montant de transaction récupéré et du nonce d'interrogation ; et
f) la déclaration d'un audit du montant de transaction comme réussi, par le vérificateur, si l'étiquette de vérificateur générée de chacune de la première banque et de la seconde banque correspond, sinon la déclaration de l'audit comme échec.

2. Procédé mis en œuvre par processeur selon la revendication 1, dans lequel si la demande de transaction bilatérale concerne des règlements interbancaires avec confidentialité activée entre la première banque et la seconde banque, le procédé effectue les étapes comprenant :

l'exécution (206a) d'un contrat intelligent interrogeant des débits et des crédits chiffrés de la première banque et de la seconde banque pour obtenir une somme chiffrée de crédits et une somme de débits pour chacune de la première banque et de la seconde banque dans un cycle de règlement, chiffrés sous une première clé publique de la première banque et une seconde clé publique de la seconde banque à partir de la paire de clés CH-PRE ;
le stockage (206b) de la somme chiffrée de crédits et de la somme de débits pour chacune de la première banque et de la seconde banque sur la chaîne de blocs ;
l'interrogation (206c), par le vérificateur, de la première banque et de la seconde banque pour le règlement interbancaire avec confidentialité activée en utilisant un nonce d'interrogation de règlement ;
la génération (206d) par chacune de la première banque et de la seconde banque et le partage avec le vérificateur i) d'une étiquette de banque de règlement en utilisant le nonce d'interrogation de règlement et un déchiffrement de la somme chiffrée de crédits et de la somme de débits en utilisant la clé secrète de banque, et ii) d'une clé de rechiffrement en utilisant la clé secrète de banque, la clé publique de banque, la clé publique de vérificateur et le prédicat ;
le rechiffrement (206e), par le vérificateur, d'un déchiffrement de la somme chiffrée de crédits et de la somme de débits pour chacune de la première banque et de la seconde banque en utilisant le prédicat et la clé de rechiffrement partagés par chacune de la première banque et de la seconde banque pour obtenir une somme rechiffrée de crédits et une somme de débits pour chacune de la première banque et de la seconde banque ;
la récupération (206f), par le vérificateur, de la somme de débits et de la somme de crédits pour chacune de la première banque et de la seconde banque à partir de la somme rechiffrée de crédits et de la somme de débits pour chacune de la première banque et de la seconde banque en utilisant le prédicat et la clé secrète de vérificateur ;
la génération (206g), par le vérificateur, d'une étiquette de vérificateur de règlement pour chacune de la première banque et de la seconde banque, à partir de la somme récupérée de débits et de la somme de crédits pour chacune de la première banque et de la seconde banque, et du nonce d'interrogation de règlement ; et

la déclaration (206h) du règlement interbancaire complet, par le vérificateur, si l'étiquette de vérificateur de règlement générée pour la somme de débits de la première banque et la somme de crédits de la seconde banque correspond, et l'étiquette de vérificateur de règlement pour la somme de crédits de la première banque et la somme de débits de la seconde banque correspond, sinon la déclaration du règlement interbancaire comme échec.

3.  Procédé mis en œuvre par processeur selon la revendication 1,

    dans lequel le premier solde courant chiffré et le montant de transaction chiffré au niveau de la première instance de chiffrement sont obtenus en chiffrant un premier solde courant du premier client en utilisant la clé publique de banque à partir de la paire de clés CH-PRE et un prédicat factice avec une valeur unitaire ; et
    dans lequel le second solde courant chiffré et le montant de transaction chiffré au niveau de la première instance de chiffrement sont obtenus en chiffrant un second solde courant du second client en utilisant la clé publique de banque de la seconde banque à partir de la paire de clés CH-PRE et le prédicat factice avec une valeur unitaire.

4.  Procédé mis en œuvre par processeur selon la revendication 1, dans lequel le tuple active l'audit avec confidentialité activée par le vérificateur, et dans lequel l'ID de transaction est utilisé pour valider un ID de transaction interrogé envoyé par le vérificateur, l'ID d'utilisateur est utilisé pour récupérer toutes les transactions concernant un client interrogé et l'ID de banque est utilisé pour récupérer toutes les transactions effectuées par une banque.

5.  Système (100) pour la confidentialité des transactions et l'audit, le système (100) comprenant :
    un sous-réseau, au sein d'un réseau de chaîne de blocs commandé par un ou plusieurs processeurs matériels (104), comprenant une première banque, une seconde banque et un vérificateur participant au sous-réseau par l'intermédiaire d'un nœud associé couplé, dans lequel les un ou plusieurs processeurs matériels (104) sont couplés à une mémoire (102) par l'intermédiaire d'une ou plusieurs interfaces E/S (106), dans lequel les un ou plusieurs processeurs matériels (104) sont configurés par les instructions pour :

    détecter l'initiation d'une demande de transaction bilatérale comprenant l'un parmi : (a) un transfert de fonds interbancaire d'un premier client de la première banque à un second client de la seconde banque avec un audit avec confidentialité activée par le vérificateur, et (b) des règlements interbancaires avec confidentialité activée entre la première banque et la seconde banque, dans lequel la première banque, la seconde banque et le vérificateur possèdent individuellement une paire de clés de rechiffrement de mandataire homomorphique conditionnel (CH-PRE) comprenant une clé publique stockée sur la chaîne de blocs et une clé secrète ;
    exécuter, par la première banque et la seconde banque par l'intermédiaire du nœud associé commandé par les un ou plusieurs processeurs matériels, un contrat intelligent, si la demande de transaction bilatérale est le transfert de fonds interbancaire pour un montant de transaction, dans lequel le contrat intelligent est exécuté pour i) déduire un premier solde actuel chiffré d'un premier client par un montant de transaction chiffré au niveau d'une première instance de chiffrement pour obtenir un premier solde mis à jour chiffré, et ii) ajouter le premier montant de transaction chiffré à un second solde actuel chiffré pour obtenir un second solde mis à jour chiffré pour le second client ;
    chiffrer, par la première banque et la seconde banque par l'intermédiaire du nœud associé commandé par les un ou plusieurs processeurs matériels, le montant de transaction, dans lequel i) la première banque utilise une fonction CH-PRE ayant un premier prédicat comprenant un tuple (un identifiant de transaction (txid), un ID d'utilisateur et un ID de banque) et ii) la seconde banque utilise la fonction CH-PRE ayant le second prédicat comprenant le tuple, pour obtenir un montant de transaction chiffré associé à une seconde instance de chiffrement ;
    stocker, par l'intermédiaire du nœud associé commandé par les un ou plusieurs processeurs matériels, i) par la première banque le premier solde mis à jour chiffré et le montant de transaction chiffré associé à la seconde instance de chiffrement, et ii) par la seconde banque le second solde mis à jour chiffré et le montant de transaction chiffré associé à la seconde instance de chiffrement ; et
    effectuer, par le vérificateur par l'intermédiaire du nœud associé dans le sous-réseau, l'audit avec confidentialité activée pour le transfert de fonds interbancaire si la demande de transaction bilatérale détectée est le transfert de fonds interbancaire pour un montant de transaction, dans lequel l'audit avec confidentialité activée comprend les étapes de :

    a) l'interrogation, par le vérificateur, de la première banque et de la seconde banque sur le transfert de fonds interbancaire en utilisant les ID de transaction et un nonce d'interrogation ;
    b) la génération par chacune de la première banque et de la seconde banque, et le partage avec le vérificateur i) d'une étiquette calculée par banque en utilisant le nonce d'interrogation et le second montant de transaction chiffré interrogé à partir de la chaîne de blocs, et ii) d'une clé de rechiffrement en utilisant une clé secrète de banque, une clé publique de banque, une clé publique de vérificateur et le prédicat ;

c) le rechiffrement, par le vérificateur, du second montant de transaction chiffré pour chacune de la première banque et de la seconde banque en utilisant le prédicat et la clé de rechiffrement partagés par chacune de la première banque et de la seconde banque pour obtenir un montant de transaction rechiffré pour chacune de la première banque et de la seconde banque ;

d) la récupération du montant de transaction par le vérificateur à partir du montant de transaction rechiffré en utilisant le prédicat et une clé secrète de vérificateur ;

e) la génération, par le vérificateur, d'une étiquette de vérificateur pour chacune de la première banque et de la seconde banque, sur la base du montant de transaction récupéré et du nonce d'interrogation ; et

f) la déclaration d'un audit du montant de transaction comme réussi, par le vérificateur, si l'étiquette de vérificateur générée de chacune de la première banque et de la seconde banque correspond, sinon la déclaration de l'audit comme échec.

6. Système selon la revendication 5, dans lequel les un ou plusieurs processeurs matériels (104) sont configurés pour effectuer, si la demande de transaction bilatérale concerne des règlements interbancaires avec confidentialité activée entre la première banque et la seconde banque, les étapes comprenant :

l'exécution d'un contrat intelligent interrogeant des débits et des crédits chiffrés de la première banque et de la seconde banque pour obtenir une somme chiffrée de crédits et une somme de débits pour chacune de la première banque et de la seconde banque dans un cycle de règlement, chiffrés sous une première clé publique de la première banque et une seconde clé publique de la seconde banque à partir de la paire de clés CH-PRE ;

le stockage de la somme chiffrée de crédits et de la somme de débits pour chacune de la première banque et de la seconde banque sur la chaîne de blocs ;

l'interrogation, par le vérificateur, de la première banque et de la seconde banque pour le règlement interbancaire avec confidentialité activée en utilisant un nonce d'interrogation de règlement ;

la génération par chacune de la première banque et de la seconde banque et le partage avec le vérificateur i) d'une étiquette de banque de règlement en utilisant le nonce d'interrogation de règlement et un déchiffrement de la somme chiffrée de crédits et de la somme de débits en utilisant la clé secrète de banque, et ii) d'une clé de rechiffrement en utilisant la clé secrète de banque, la clé publique de banque, la clé publique de vérificateur et le prédicat ;

le rechiffrement, par le vérificateur, d'un déchiffrement de la somme chiffrée de crédits et de la somme de débits pour chacune de la première banque et de la seconde banque en utilisant le prédicat et la clé de rechiffrement partagés par chacune de la première banque et de la seconde banque pour obtenir une somme rechiffrée de crédits et une somme de débits pour chacune de la première banque et de la seconde banque ;

la récupération, par le vérificateur, de la somme de débits et de la somme de crédits pour chacune de la première banque et de la seconde banque à partir de la somme rechiffrée de crédits et de la somme de débits pour chacune de la première banque et de la seconde banque en utilisant le prédicat et la clé secrète de vérificateur ;

la génération, par le vérificateur, d'une étiquette de vérificateur de règlement pour chacune de la première banque et de la seconde banque, à partir de la somme récupérée de débits et de la somme de crédits pour chacune de la première banque et de la seconde banque, et du nonce d'interrogation de règlement ; et

la déclaration du règlement interbancaire complet, par le vérificateur, si l'étiquette de vérificateur de règlement générée pour la somme de débits de la première banque et la somme de crédits de la seconde banque correspond, et l'étiquette de vérificateur de règlement pour la somme de crédits de la première banque et la somme de débits de la seconde banque correspond, sinon la déclaration du règlement interbancaire comme échec.

7. Système selon la revendication 5,

dans lequel le premier solde courant chiffré et le montant de transaction chiffré au niveau de la première instance de chiffrement sont obtenus en chiffrant un premier solde courant du premier client en utilisant la clé publique de banque à partir de la paire de clés CH-PRE et un prédicat factice avec une valeur unitaire ; et

dans lequel le second solde courant chiffré et le montant de transaction chiffré au niveau de la première instance de chiffrement sont obtenus en chiffrant un second solde courant du second client en utilisant la clé publique de banque de la seconde banque à partir de la paire de clés CH-PRE et le prédicat factice avec une valeur unitaire.

8. Système selon la revendication 5, dans lequel le tuple active l'audit avec confidentialité activée par le vérificateur, et dans lequel l'ID de transaction est utilisé pour valider un ID de transaction interrogé envoyé par le vérificateur, l'ID d'utilisateur est utilisé pour récupérer toutes les transactions concernant un client interrogé et l'ID de banque est utilisé pour récupérer toutes les transactions effectuées par une banque.

9. Un ou plusieurs supports de stockage d'informations lisibles par machine non transitoires comprenant une ou plusieurs instructions qui, lorsqu'elles sont exécutées par un ou plusieurs processeurs matériels, amènent :

la détection, par un sous-réseau au sein d'un réseau de chaîne de blocs commandé par un ou plusieurs processeurs matériels, de l'initiation d'une demande de transaction bilatérale comprenant l'un parmi : (a) un transfert de fonds interbancaire d'un premier client d'une première banque à un second client d'une seconde banque avec un audit avec confidentialité activée par un vérificateur, et (b) des règlements interbancaires avec confidentialité activée entre la première banque et la seconde banque, dans lequel première banque, la seconde banque et le vérificateur participent au sous-réseau par l'intermédiaire d'un nœud associé, et dans lequel la première banque, la seconde banque et le vérificateur possèdent individuellement une paire de clés de rechiffrement de mandataire homomorphique conditionnel (CH-PRE) comprenant une clé publique stockée sur la chaîne de blocs et une clé secrète ;

l'exécution, par la première banque et la seconde banque par l'intermédiaire du nœud associé commandé par les un ou plusieurs processeurs matériels, d'un contrat intelligent, si la demande de transaction bilatérale est le transfert de fonds interbancaire pour un montant de transaction, dans lequel le contrat intelligent est exécuté pour i) déduire un premier solde actuel chiffré d'un premier client par un montant de transaction chiffré au niveau d'une première instance de chiffrement pour obtenir un premier solde mis à jour chiffré, et ii) ajouter le premier montant de transaction chiffré à un second solde actuel chiffré pour obtenir un second solde mis à jour chiffré pour le second client ;

le chiffrement, par la première banque et la seconde banque par l'intermédiaire du nœud associé commandé par les un ou plusieurs processeurs matériels, du montant de transaction, dans lequel i) la première banque utilise une fonction CH-PRE ayant un premier prédicat comprenant un tuple (un identifiant de transaction (txid), un ID d'utilisateur et un ID de banque) et ii) la seconde banque utilise la fonction CH-PRE ayant le second prédicat comprenant le tuple, pour obtenir un montant de transaction chiffré associé à une seconde instance de chiffrement ;

le stockage, par l'intermédiaire du nœud associé commandé par les un ou plusieurs processeurs matériels, i) par la première banque du premier solde mis à jour chiffré et du montant de transaction chiffré associé à la seconde instance de chiffrement, et ii) par la seconde banque du second solde mis à jour chiffré et du montant de transaction chiffré associé à la seconde instance de chiffrement ; et

l'exécution, par le vérificateur par l'intermédiaire du nœud associé dans le sous-réseau, de l'audit avec confidentialité activée pour le transfert de fonds interbancaire si la demande de transaction bilatérale détectée est le transfert de fonds interbancaire pour un montant de transaction, dans lequel l'audit avec confidentialité activée comprend les étapes de :

a) l'interrogation, par le vérificateur, de la première banque et de la seconde banque sur le transfert de fonds interbancaire en utilisant les ID de transaction et un nonce d'interrogation ;

b) la génération par chacune de la première banque et de la seconde banque, et le partage avec le vérificateur i) d'une étiquette calculée par banque en utilisant le nonce d'interrogation et le second montant de transaction chiffré interrogé à partir de la chaîne de blocs, et ii) d'une clé de rechiffrement en utilisant une clé secrète de banque, une clé publique de banque, une clé publique de vérificateur et le prédicat ;

c) le rechiffrement, par le vérificateur, du second montant de transaction chiffré pour chacune de la première banque et de la seconde banque en utilisant le prédicat et la clé de rechiffrement partagés par chacune de la première banque et de la seconde banque pour obtenir un montant de transaction rechiffré pour chacune de la première banque et de la seconde banque ;

d) la récupération du montant de transaction par le vérificateur à partir du montant de transaction rechiffré en utilisant le prédicat et une clé secrète de vérificateur ;

e) la génération, par le vérificateur, d'une étiquette de vérificateur pour chacune de la première banque et de la seconde banque, sur la base du montant de transaction récupéré et du nonce d'interrogation ; et

f) la déclaration d'un audit du montant de transaction comme réussi, par le vérificateur, si l'étiquette de vérificateur générée de chacune de la première banque et de la seconde banque correspond, sinon la déclaration de l'audit comme échec.

10. Un ou plusieurs supports de stockage d'informations lisibles par machine non transitoires selon la revendication 9, effectuant des étapes, si la demande de transaction bilatérale concerne des règlements interbancaires avec confidentialité activée entre la première banque et la seconde banque, les étapes comprenant :

l'exécution d'un contrat intelligent interrogeant des débits et des crédits chiffrés de la première banque et de la seconde banque pour obtenir une somme chiffrée de crédits et une somme de débits pour chacune de la première banque et de la seconde banque dans un cycle de règlement, chiffrés sous une première clé publique de la première banque et une seconde clé publique de la seconde banque à partir de la paire de clés CH-PRE ;

le stockage de la somme chiffrée de crédits et de la somme de débits pour chacune de la première banque et de la seconde banque sur la chaîne de blocs ;

l'interrogation, par le vérificateur, de la première banque et de la seconde banque pour le règlement interbancaire avec confidentialité activée en utilisant un nonce d'interrogation de règlement ;

la génération par chacune de la première banque et de la seconde banque et le partage avec le vérificateur i) d'une étiquette de banque de règlement en utilisant le nonce d'interrogation de règlement et un déchiffrement de la somme chiffrée de crédits et de la somme de débits en utilisant la clé secrète de banque, et ii) d'une clé de rechiffrement en utilisant la clé secrète de banque, la clé publique de banque, la clé publique de vérificateur et le prédicat ;

le rechiffrement, par le vérificateur, d'un déchiffrement de la somme chiffrée de crédits et de la somme de débits pour chacune de la première banque et de la seconde banque en utilisant le prédicat et la clé de rechiffrement partagés par chacune de la première banque et de la seconde banque pour obtenir une somme rechiffrée de crédits et une somme de débits pour chacune de la première banque et de la seconde banque ;

la récupération, par le vérificateur, de la somme de débits et de la somme de crédits pour chacune de la première banque et de la seconde banque à partir de la somme rechiffrée de crédits et de la somme de débits pour chacune de la première banque et de la seconde banque en utilisant le prédicat et la clé secrète de vérificateur ;

la génération, par le vérificateur, d'une étiquette de vérificateur de règlement pour chacune de la première banque et de la seconde banque, à partir de la somme récupérée de débits et de la somme de crédits pour chacune de la première banque et de la seconde banque, et du nonce d'interrogation de règlement ; et

la déclaration du règlement interbancaire complet, par le vérificateur, si l'étiquette de vérificateur de règlement générée pour la somme de débits de la première banque et la somme de crédits de la seconde banque correspond, et l'étiquette de vérificateur de règlement pour la somme de crédits de la première banque et la somme de débits de la seconde banque correspond, sinon la déclaration du règlement interbancaire comme échec.

11. Un ou plusieurs supports de stockage d'informations lisibles par machine non transitoires selon la revendication 9,

dans lequel le premier solde courant chiffré et le montant de transaction chiffré au niveau de la première instance de chiffrement sont obtenus en chiffrant un premier solde courant du premier client en utilisant la clé publique de banque à partir de la paire de clés CH-PRE et un prédicat factice avec une valeur unitaire ; et

dans lequel le second solde courant chiffré et le montant de transaction chiffré au niveau de la première instance de chiffrement sont obtenus en chiffrant un second solde courant du second client en utilisant la clé publique de banque de la seconde banque à partir de la paire de clés CH-PRE et le prédicat factice avec une valeur unitaire.

12. Un ou plusieurs supports de stockage d'informations lisibles par machine non transitoires selon la revendication 9, dans lequel le tuple active l'audit avec confidentialité activée par le vérificateur, et dans lequel l'ID de transaction est utilisé pour valider un ID de transaction interrogé envoyé par le vérificateur, l'ID d'utilisateur est utilisé pour récupérer toutes les transactions concernant un client interrogé et l'ID de banque est utilisé pour récupérer toutes les transactions effectuées par une banque.

System<u>100</u>

Processor(s) <u>104</u>

I/O Interface(s) <u>106</u>

Memory <u>102</u>

Database <u>108</u>

Modules <u>110</u>

FIG. 1

200

detecting initiation of a bilateral transaction request comprising one of: (a) an inter-bank fund transfer from a first customer of a first bank to second customer of a second bank with a privacy enabled auditing by a verifier, and (b) privacy enabled inter-bank settlements between the first bank and the second bank, wherein subnetwork comprises the first bank, the second bank and the verifier participating in the subnetwork via associated node, and wherein the first bank, the second bank and the verifier individually own a CH-PRE key pair comprising a public key stored on the blockchain and a secret key

202

Privacy enabled auditing
for inter-bank fund
transfer (204a-d)

B

Privacy enabled
interbank settlements
206a-h

executing, by the first bank and the second bank a smart contract, if the bilateral transaction request is the inter-bank fund transfer for a transaction amount, wherein the smart contract is executed to i) deduct an encrypted first current balance of a first customer by an encrypted transaction amount to obtain an encrypted first updated balance, and ii) add the first encrypted transaction amount to an encrypted second current balance to obtain an encrypted second updated balance for the second customer

204a

A

FIG. 2A

200

(A)

encrypting the transaction amount by i) the first bank using a CH-PRE function having a first predicate comprising a tuple (a transaction Identifier (txid), a user ID and a bank ID) and ii) the second bank using a CH-PRE function having the second predicate comprising the tuple, to obtain a second encrypted transaction amount

204b

storing by i) the first bank the encrypted first updated balance and the second encrypted transaction amount, and ii) the second bank the encrypted second updated balance and the second encrypted transaction amount

204c

performing, by the verifier via the associated node in the subnetwork, the privacy enabled auditing for the inter-bank fund transfer if the detected bilateral transaction request is the inter-bank fund transfer for a transaction amount

204d

FIG. 2B

200

B  Privacy enabled
interbank settlements

executing a smart contract querying encrypted debits and credits of the first bank and the second bank to obtain encrypted sum of credits and sum of debits for each of the first bank and the second bank in a settlement cycle, encrypted under a first public key of the of the first bank and a second public key of the second bank from the CH-PRE key pair — 206a

storing the encrypted sum of credits and sum of debits for each of the first bank and the second bank on the block chain — 206b

challenging, the first bank and the second bank by the verifier for the privacy enabled interbank settlement using a settlement challenge nonce ( random challenge nonce and bank id) — 206c

generating by each of the first bank and the second bank and sharing with the verifier i) a settlement bank tag by using the settlement challenge nonce and a decryption of encrypted sum of credits and sum of debits using the bank secret key, and ii) a re-encryption key using the bank secret key, bank public key, verifier public key and the predicate — 206d

C

FIG. 2C

200

( C )  Privacy enabled
interbank settlements

re-encrypting, by the verifier, a decryption of encrypted sum of credits and sum of debits for each of the first bank and the second bank using the predicate and the re-encryption key shared by each of the first bank and the second bank to obtain re-encrypted sum of credits and sum of debits for each of the first bank and the second bank

— 206e

retrieving sum of debits and sum of credits for each of the first bank and the second bank by the verifier from the re-encrypted sum of credits and sum of debits for each of the first bank and the second bank using the predicate and the verifier secret key

— 206f

generating, a settlement verifier tag for each of the first bank and the second bank, by the verifier from the retrieved sum of debits and sum of credits for each of the first bank and the second bank, and the settlement challenge nonce

— 206g

declaring the interbank settlement complete, by the verifier, if the generated settlement verifier tag for sum of debits of the first bank and the sum of credits of the second bank match, and settlement verifier tag for sum of credits of the first bank and the sum of debits of the second bank match, else declaring the interbank settlement as failure

— 206h

FIG. 2D

$$t_1 : C_A \xrightarrow{T} C_B$$

FIG. 3A

**FIG. 3B**

**Blockchain**

2.Query c1

2. Query c2

7. tx success/fail

5 $E_{pk_A}(T)$

1.Challenge: *txid, N*

1.Challenge: *txid, N*

4 $rk_A$ $tag_A$

4 $rk_B$ $tag_B$

$pk_V, sk_V$

**Verifier**

$pk_A, sk_A$

**Bank A**

$pk_B, sk_B$

**Bank B**

6

$c1' = reencrypt(c1, rk_A, p)$ $T = decrypt(c1', sk_V, p)$

$tag_{VA} = Hmac(T, N)$

3 $tag_A = Hmac(decrypt(c1), N)$

3 $tag_B = Hmac(decrypt(c2), N)$

$rk_A = rekeygen(sk_A, pk_A, pk_V$ $c2' = reencrypt(c2, rk_B, p)$ $T = decrypt(c2', sk_V, p)$ $rk_B = rekeygen(sk_B, pk_B, pk_V, p)$

$tag_{VB} = Hmac(T, N)$

$tag_{VA} == tag_{VB}$

**FIG. 4**

$E_{pk_A}(T_{AD})$
$E_{pk_A}(T_{AC})$
$E_{pk_B}(T_{BD})$
$E_{pk_B}(T_{BC})$

**Blockchain**

$cc1 = E_{pk_A}(T_{AD})$    $cc3 = E_{pk_B}(T_{BD})$
$cc2 = E_{pk_A}(T_{AC})$    $cc4 = E_{pk_B}(T_{BC})$

1.   Challenge: $N$      1.   Challenge: $N$

4.   $rk_A$   $tag_{AD}, tag_{AC}$      4.   $rk_B$   $tag_{BD}, tag_{BC}$

$pk_A, sk_A$   **Bank A**      $pk_V, sk_V$      **Bank B**   $pk_B, sk_B$

**(Verifier)**

3. $tag_{AD} = Hmac(T_{AD}, N)$      $cc1' = reencrypt(cc1, rk_A, p)$    $cc2' = reencrypt(cc2, rk_A, p)$      3. $tag_{BD} = Hmac(T_{BD}, N)$

$tag_{AC} = Hmac(T_{AC}, N)$      $tag'_{AD} = Hmac(decrypt(cc1', sk_V, p), N)$ $tag'_{AC} = Hmac(decrypt(cc2', sk_V, p), N)$      $tag_{BC} = Hmac(T_{BC}, N)$

$cc3' = reencrypt(cc3, rk_B, p)$    $cc4' = reencrypt(cc4, rk_B, p)$

$tag'_{BD} = Hmac(decrypt(cc3', sk_V, p), N)$   $tag'_{BC} = Hmac(decrypt(cc4', sk_V, p), N)$

$tag_{AD} = tag'_{AD}$    $tag_{AC} = tag'_{AC}$    $tag_{BD} = tag'_{BD}$    $tag_{BC} = tag'_{BC}$   $r1 = (tag'_{AD} == tag'_{BC})$   $r2 = (tag'_{AC} == tag'_{BD})$

**Verifier completes the settlement only if *r1* and *r2* are true**

**EP 4 513 824 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321056431

**Non-patent literature cited in the description**

- Inter-Bank Payment System on Enterprise Blockchain Platform. **WANG XIN et al.** INTERNATIONAL CONFERENCE ON CLOUD COMPUTING (CLOUD). IEEE, 02 July 2018, 614-621